# EUROPÄISCHE PATENTANMELDUNG

(11) **EP 1 447 494 A2**
(43) Veröffentlichungstag der Anmeldung: **18.08.2004**
(21) Anmeldenummer: 03026427.9
(22) Anmeldetag: 19.11.2003
(51) Int. Cl.: E04F 11/18, E04B 9/32

(54) **Vorrichtung für die Halterung von Platten**

(30) Priorität: 20.11.2002 DE 20217981 U; 13.12.2002 DE 10258683; 05.06.2003 DE 10325903; 18.06.2003 DE 10327752; 13.06.2003 DE 10327074
(71) Anmelder: Orbach, Joachim, 51545 Waldbröl (DE); Radermacher, Joachim, 51545 Waldbröl (DE)
(72) Erfinder: Joachim Orbach, 51545 Waldbröl (DE); Joachim Radermacher, 51545 Waldbröl (DE); Joachim Fechner, 53773 Hennef (DE)
(74) Vertreter: Fechner, Joachim, Dr.-Ing.

(57) **Zusammenfassung**

Vorrichtung für die Halterung von Platten an neben den Platten in der Plattenebene oder seitlich von der Plattenebene versetzt angeordneten Tragelementen, insbesondere Pfosten, mit Haltern (2) mit einem Montageteil (3) an ihrem einen Ende und einem Anschraubteil (5) an ihrem anderen Ende, dadurch gekennzeichnet, daß der Montaleteil (3) einen Teller (3^{b},7) mit einer an der Platte (1) angreifenden Fläche umfaßt, seitlich an dem Montageteil (3) ein sich zu dem Plattenrand (1^{a}) hin erstreckender Arm (4) angeformt ist, an dem von dem Arm (4) abgewinkelt oder abgekröpft der Anschraubteil (5) angeformt ist, und das Plattengewicht durch auf derselben Seite der Platte (1) angreifende Halter (2) einseitig an den Tragelementen (6) abgestützt ist. Die Vorrichtung ist im Vergleich zu bekannten Systemen vereinfacht und ganz oder überwiegend nur auf einer Seite der Platte (1) angeordnet. Der Abstand der Kanten zweier benachbarter Platten kann beliebig verringert werden.

## Beschreibung

Die Erfindung betrifft eine Vorrichtung für die Halterung von Platten an in der Plattenebene zwischen den Platten oder seitlich von der Plattenebene versetzt angeordneten Tragelementen, insbesondere Pfosten, mit Haltern mit einem Montageteil an ihrem einen Ende und einem Anschraubteil an ihrem anderen Ende. Die Platten können beispielsweise Einscheibensicherheitsglasplatten, Verbundsicherheitsglasplatten, Solarplatten oder Schichtstoffplatten sein. Als Tragelement können außer Pfosten verschiedener Art auch Nutenschienen zum Einsatz kommen. Die Erfindung betrifft ferner einen Halter für Platten an Tragelementen, insbesondere an Pfosten, Säulen oder Wänden, mit einem an der Platte anzubringenden Montageteil und einem über einen Adapter an dem Tragelement anzubringenden Anschlußteil Die Erfindung ist insbesondere auf Halter für Glasplatten gerichtet, die für die vertikale, horizontale, geneigte oder in der Neigung variable Plattenhalterung geeignet sind. Nach einem weiteren Aspekt betrifft die Erfindung eine Vorrichtung für die Halterung einer Platte, an zwei in der Plattenebene oder zur Plattenebene seitlich versetzt angeordneten Tragelementen, mit wenigstens zwei Haltern, die jeweils einen den einen Teil einer Steckverbindung aufweisenden ersten Montageteil zur Verbindung mit dem anderen Steckverbindungsteil an dem Tragelement und einen an der Platte angebrachten zweiten Montageteil umfassen. Die zu haltende Platte ist insbesondere eine Glasplatte, z.B. eine Verbundglasplatte, eine mit photovoltaischen oder thermophotovoltaischen Solarmodulen bestückte Glasplatte, vorzugsweise aber eine lichtdurchlässige rahmenlose und bauaufsichtlich zugelassene Solarplatte. Dabei besteht diese Platte dem Aufbau nach aus einer Frontglasscheibe, einer amorphen Silizium-Dünnschicht als Stapelzellen, PVB-Folie und einem teilvorgespannten Rückglas. Die Platten können aber auch aus einem anderen Werkstoff, wie Faserzement, oder aus einem Schichtstoff sein. Die vorzugsweise länglichen Tragelemente können beispielsweise Pfosten, Stützträger oder horizontale oder geneigte Dachträger sein. Schließlich betrifft die Erfindung eine Vorrichtung der eingangs genannten Art, bei der der Montageteil einen ersten und einen zweiten Teller hat, die an der Platte beiderseits einer Plattenbohrung angreifen, wobei der erste Teller einen axialen Zapfen trägt und durch die Plattenbohrung hindurch mit dem zweiten Teller verschraubbar ist.

Der vorliegenden Erfindung liegt die Aufgabe zugrunde, eine Vorrichtung für die Halterung einer Platte an Tragelementen, insbesondere Pfosten zu schaffen, die gegenüber bekannten Halterungsvorrichtungen vereinfacht ist. Ferner soll ein Halterungssystem für eine Platte geschaffen werden, das ganz oder überwiegend auf einer Seite der Platte angeordnet ist, so daß der ästhetische Eindruck nicht durch auf beiden Seiten der Platte angreifende Backen beeinträchtigt wird. Schließlich soll eine Halterungsvorrichtung für Platten an Pfosten, Tragschienen und dergl. geschaffen werden, bei der der Plattenabstand verringert werden kann, wobei das Tragelement in der Plattenebene zwischen den Platten oder seitlich gegenüber der Plattenebene versetzt (vorgesetzte Montage) angeordnet sein kann. Der Erfindung liegt auch die Aufgabe zugrunde, einen an einem Tragelement anzubringenden Halter für eine Platte, insbesondere eine Glasplatte zu schaffen, mit dem die Platte in unterschiedlichen Lagen gehalten werden kann, so daß der Halter universell einsetzbar ist. So soll der Halter beispielsweise für vertikale Glaswände, wie z.B. Balkonbrüstungen, horizontale Glasböden oder geneigte Glasvordächer gleichermassen einsetzbar sein. Der Halter soll nicht nur an unterschiedlichen Tragelementen benutzt werden können, sondern auch für unterschiedliche Montagen der zu haltenden Platte, wie z.B. mechanische Verschraubung oder Verklebung, geeignet sein. Nach einem weiteren Aspekt liegt der Erfindung die Aufgabe zugrunde, eine Vorrichtung für die Halterung einer Platte an zwei länglichen Tragelementen wie z.B. Pfosten, mit zwei oder mehr Haltern zu schaffen, bei der die Montage der Platte an den Tragelementen wesentlich vereinfacht wird. Insbesondere sollen die Halter an der Platte vormontiert und auch die Tragelemente so vorbereitet werden können, daß die Montagearbeit auf der Baustelle im Vergleich zu bekannten Systemen erheblich reduziert wird. Ferner soll die Platte zwar wieder mühelos demontiert werden können, aber gegen Demontage durch unberufene Personen gesichert sein. Auch soll die erfindungsgemäße Halterungsvorrichtung bei vertikalen Pfosten wie auch bei horizontalen oder geneigten Tragelementen, wie Dachträgern, einsetzbar sein. Schließlich soll die Vorrichtung der Erfindung in bevorzugter Ausführung auch zur Erlangung der allgemeinen bauaufsichtlichen Zulassung beim Deutschen Institut für Bautechnik geeignet sein. Aufgabe der vorliegenden Erfindung ist es ferner, die einen Punkthalter darstellende Halterungsvorrichtung weiter zu entwickeln und seinen Gebrauchswert zu erhöhen. Insbesondere soll diese Vorrichtung zu einem Halter mit Doppelfunktion erweitert werden. Der Erfindung liegt insbesondere auch die Aufgabe zugrunde, eine Vorrichtung für die Halterung parallelogrammförmiger Platten an Tragelementen, insbesondere an Pfosten zu schaffen, die bei Treppengeländern verwendet werden kann. Dabei soll die Form des Halters der Treppenneigung angepaßt werden können, so daß die Montagepunkte in den Platten immer gleiche Randabstände haben können, egal, ob die Platten im Treppenverlauf parallelogrammförmig oder im Bereiche eines Podestes rechteckig ist. Ferner soll die Halterungsvorrichtung an unterschiedliche Treppenneigungen angepaßt werden können, so daß sich in Verbindung mit den parallelogrammförmigen Glasplatten ein optimaler ästhetischer Eindruck des Treppengeländers ergibt.

Diese Aufgabe wird bei der eingangs genannten Halterungsvorrichtung erfindungsgemäß dadurch gelöst, daß der Montageteil des Halters einen Teller mit einer an der Platte angreifenden Fläche umfaßt, seitlich an dem Montageteil ein sich bis zum Plattenrand erstreckender Arm angeformt ist, an den von dem Arm abgewinkelt oder abgekröpft der Anschraubteil angeformt ist und das Plattengewicht durch auf derselben Seite der Platte angreifende Halter einseitig an den Tragelementen abgestützt ist. Bei der Vorrichtung der Erfindung ist nur die ebene Fläche des Tellers über eine Zwischenschicht mit der Platte in Eingriff. Die Eingriffs- oder Angriffsfläche reicht daher nicht bis zum Rand der Platte. Stattdessen ist an dem Montageteil seitlich ein sich zum Plattenrand hin erstreckender Arm angeformt, an den der Anschraubteil in der gewünschten Winkellage entsprechend der Position des Tragelements ängeformt ist. Dabei ist wesentlich, daß die Halter nur auf derselben Seite der Platte angreifen und daher die Platte einseitig getragen wird. Auf der anderen Plattenseite befinden sich daher keine Arme zur Gewichtsübertragung auf das Tragelement, was ästhetisch vorteilhaft wirkt. Damit entfällt bei der Montage die Verbindung eines Deckelteils mit dem Anschraubteil, und der Anschraubteil kann vereinfacht werden, da er nur für das Anschrauben an dem Tragelement eingerichtet ist, aber nicht mehr für die Verschraubung mit einem Deckelteil.

Die dadurch bedingte Vereinfachung des Anschraubteils ermöglicht seine Verkleinerung. Dadurch können nicht nur Herstellungskosten gespart werden, sondern die Breite des Spaltes zwischen Plattenkante und Tragelement kann verringert werden. Die einseitige Halterung der Platte erlaubt es bei vorgesetzter Montage, d.h. bei seitlich gegen die Plattenebene versetzten Tragelementen, die Breite des Plattenspaltes beliebig zu verengen. Der genannte Teller ist an dem Montageteil angeformt und hat vorzugsweise einen kreisbogenförmigen Umriss, kann aber auch einen anderen, z.B. eckigen Umriss haben. Er hat eine ebene Fläche, die über eine elastomere Ringscheibe oder eine Klebeschicht an der Platte angreift. Im allgemeinen ist der Anschraubteil um 90° abgewinkelt, und zwar zur Plattenebene hin, wenn die Tragelemente zwischen den Platten in der Plattenebene angeordnet sind und der Arm über die jeweilige Plattenkante hinausragt. Der Anschraubteil kann aber auch um 90° oder einen anderen Winkel von der Platte weg abgewinkelt sein. Diese Ausführung kommt bei vorgesetzter Montage zur Anwendung. Der Arm kann in diesem Falle vor dem Plattenrand enden oder auch über den Plattenrand hinausreichen.

Bei einer weiteren Ausführungsform ist der Anschraubteil des Halters von dem Arm abgekröpft. Durch eine geeignete Abkröpfung kann der Anschraubteil so positioniert werden, daß er sich an einen zwischen den Platten in der Plattenebene angeordneten Pfosten gegebener Größe anpaßt.

Vorzugsweise verläuft der Arm des montierten Halters mit Abstand zur Platte. Durch diese Anordnung des Arms kann der Anschraubteil vorteilhaft zum Tragelement positioniert werden, insbesondere, wenn sich dieses in der Plattenebene zwischen den Platten befindet.

Im allgemeinen erstreckt sich der Arm mit dem Anschraubteil über den Rand der Platte hinaus. Dies ist der Fall, wenn sich das Tragelement, z.B. der Pfosten, in der Plattenebene zwischen zwei Platten befindet. Die Anschraubachse kann dann in der Plattenebene oder, insbesondere bei abgekröpftem Arm, unter einem rechten Winkel zur Plattenebene verlaufen.

Vorzugsweise ist der Anschraubteil für die Aufnahme eines Adapters zur Anpassung an unterschiedliche Querschnitte oder Formen des Tragelements eingerichtet. Der gleiche Halter kann daher unter Benutzung verschiedener Adapter z.B. für Rundrohr- oder Eckigrohrpfosten oder auch für spezielle Systempfosten benutzt werden.

In dem Anschraubteil und gegebenenfalls in dem Adapter kann eine Gewindebohrung für einen Gewindestift enthalten sein. Die Gewindebohrung mit dem Gewindestift dient zur Arretierung bzw. Verdrehsicherung des Halters gegenüber dem Tragelement bzw. dem Adapter.

Bei einer Ausführungsform der erfindungsgemäßen Vorrichtung umfaßt der Montageteil einen dem Teller auf der anderen Seite der Platte gegenüberliegenden zweiten Teller, der durch eine Bohrung in der Platte mit dem Teller des Halters verschraubbar ist. Durch die Verschraubung wird der Halter an der Platte lösbar angebracht. Zwischen der Platte und den Tellern sind gummielastische Ringscheiben angeordnet, um eine Beschädigung der Platte durch Kontakt mit den metallischen Tellern zu vermeiden. Vorzugsweise ist eine axiale Gewindebuchse innenseitig an den Teller des Halters angeformt oder in den Teller eingesetzt und enthält der zweite Teller eine axiale Gewindebohrung, in die ein Gewindebolzen eingeschraubt ist, der mit der Gewindebuchse verschraubt ist, so daß der Halter an der Platte lösbar befestigt ist. Wenn die Gewindebuchse in den Teller durch Einschrauben in eine axiale Bohrung eingesetzt ist, kann die aus dem Teller innenseitig vorstehende Länge der Gewindebuchse durch mehr oder weniger tiefes Einschrauben variiert und dadurch der Plattendicke angepaßt werden. Diese vorstehenden Gewindebuchsen erleichtern die Montage der Platte, da diese nach Anbringung der Halter an den Tragelementen mit ihren Bohrungen auf die Gewindebuchsen aufgesteckt und dann die Halter nacheinander verschraubt werden können. Bei dieser Ausführungsform mit axialer Gewindebuchse kann der Halter nicht nur an in der Plattenebene zwischen den Platten angeordneten Tragelementen, sondern auch an seitlich versetzten Tragelementen (vorgesetzte Montage) angeschraubt werden. Hierzu muß die axiale Gewindebohrung im Teller des Halters eine Durchgangsbohrung sein, und die Gewindebuchse muß auf der anderen Seite des Tellers, d.h. entgegengesetzt zu dem abgewinkelten Anschraubteil vorstehen. Bei einer weiteren Ausführungsform kann an der Gewindebuchse ein axialer Zapfen mit einem Nutenstein angebracht sein und der Teller innenseitig eine T-Nut enthalten, in der der Nutenstein geführt ist. Hierdurch können Toleranzen kompensiert werden, z.B. in den Abständen der Tragelemente oder in den Abständen der Plattenbohrungen vom Plattenrand. Bei einer einfacheren Ausführungsform können auch beide Teller eine axiale Gewindebohrung enthalten und mittels eines Gewindebolzens gegenseitig verschraubt sein. Hierbei entfällt die Gewindebuchse.

Bei einer anderen Ausführungsform ist der Montageteil auf beiden Seiten gleich ausgebildet, so daß die Platte auf jeder der beiden Seiten des Montageteils anschraubbar ist. Der Halter kann daher in zwei um 180° um seine Längsachse gedrehten Lagen zum Einsatz kommen. Bei passender Ausbildung des Anschraubteils kann der Halter daher für zwischengesetzte und vorgesetzte Montage zum Einsatz kommen. Zweckmäßigerweise ist bei dieser Ausführungsform die axiale Gewindebohrung eine Durchgangsbohrung mit Senkungen an ihren beiden Enden. Die Verschraubung mit dem Teller auf der anderen Seite der Platte ist daher bei beiden Halterlagen mit der gleichen Senkkopfschraube möglich.

Bei einer anderen Ausführungsform der erfindungsgemäßen Vorrichtung umfaßt der Montageteil einen in der Platte fixierten Hinterschnittanker mit aus der Platte vorstehendem Gewindebolzen und enthält der Teller des Halters eine axiale Bohrung mit eingesetzter Hülsenmutter, die mit dem Gewindebolzen verschraubt ist. Vorteilhaft bei dieser Ausführung ist es, daß auf der den Haltern abgewandten Seite der Platte keine Metallteile vorstehen. Bei entsprechend symmetrischer Ausbildung des Tellers des Halters ist es auch hier möglich, den Halter um 180° um die Armachse geschwenkt zu montieren. Der Halter kann somit für zwischengesetzte oder vorgesetzte Montage zum Einsatz kommen.

Bei einer weiteren Ausführungsform der erfindungsgemäßen Vorrichtung ist der Montageteil des Halters durch wenigstens eine Klebeschicht mit der Platte verbunden. Dabei kann der Teller nur mit der Außenseite der Platte verklebt sein. Es ist aber auch eine abgestufte Verklebung mit der Platte möglich. Dabei kann eine Ringfläche des Tellers mit der Außenseite der Platte verklebt sein, während ein über die Ringfläche vorstehender zentraler Teil stirnseitig mit einer gegenüber der Außenseite vertieften Fläche innerhalb der Platte verklebt ist.

Vorzugsweise enthält der mit der Platte verklebte Montageteil eine Gewindebohrung und enthält der nicht verklebte Montageteil eine Durchgangsbohrung und ist mittels einer Schraube mit dem verklebten Montageteil verschraubt. Der Arm ist bei dieser Ausführung an dem nicht verklebten Montageteil angeformt. Zwischen dem nicht verklebten Montageteil und der Glasplatte kann eine elastomere Ringscheibe angeordnet sein. Diese Elastomerscheibe wird beim Aufschrauben des nicht verklebten Montageteils auf das verklebte Montageteil etwas komprimiert. Dadurch wird die Klebefuge gegen die äußere Atmosphäre abgedichtet. Außerdem wird bei stossartigen Druckeinwirkungen auf die Glasplatte die Bruckgefahr verringert.

Zweckmäßigerweise liegt der Durchmesser X der Teller in dem Bereich von etwa 40 bis 80 mm. Die radiale Überdeckung Z der Teller über den Rand der Plattenbohrung beträgt mindestens 10 mm, vorzugsweise liegt sie in dem Bereich von 15 bis 30 mm. Anstelle des zweiten Tellers kann auch eine in der Plattenbohrung angeordnete Senkkopfmutter zum Einsatz kommen. Der Abstand R zwischen dem Rand der Plattenbohrung und dem Rand der Platte beträgt zweckmäßigerweise mindestens 45 mm. Vorzugsweise liegt er je nach Ausführung in dem Bereich von 50 bis 200 mm.

Die Teller können außenseitig eine Ausnehmung aufweisen, in die ein plattenförmiger Körper eingesetzt ist. Dieser plattenförmige Körper kann als Zierelement dienen oder eine Information, z.B. ein Firmenlogo oder dergl. enthalten.

Bei einer weiteren Ausführungsform der erfindungsgemäßen Vorrichtung ist an dem Anschraubteil ein zweiter Arm mit Montageteil angeformt. Dieser Doppelarmhalter greift an zwei benachbarten Platten an und stützt sie an einem Tragelement, z.B. einem Pfosten ab. Dabei kann das Tragelement in der Plattenebene zwischen den Platten angeordnet sein, in welchem Falle der Anschraubteil zwischen den Armen im allgemeinen abgekröpft ist. Die Anschraubung an dem Tragelement kann mit oder ohne Zwischenlage eines Adapters erfolgen. Der Doppelarmhalter eignet sich auch für die vorgesetzte Montage. Hierzu ist der Anschraubteil nach beiden Seiten gleich ausgebildet, so daß die Anschraubung nach Umsetzen des Adapters nach außen auch an einem vorgesetzten Tragelement erfolgen kann.

Während die beiden Arme des Doppelarmhalters im allgemeinen einen Winkel von 180° miteinander bilden, kann der Winkel zwischen den Armen auch einen anderen Wert haben, z.B. 90° oder 135° betragen. Unter Benutzung von Doppelarmhaltern mit einem Winkel von 90° können rechtwinklige Plattenecken und mit Armwinkeln von 135° entsprechend stumpfwinklige Plattenecken erstellt werden. Mit Hilfe der erfindungsgemäßen Halter kann der Spalt zwischen den sich gegenüberliegenden Kanten zweier benachbarter Platten wesentlich verringert werden. Dieser Spalt kann auch durch ein Dichtungsprofil aus weichelastischem Material verschlossen werden.

Es wurde gefunden, daß die Aufgabe erfindungsgemäß auch dann gelöst wird, wenn der Anschraubteil ohne Abwinkelung oder Abkröpfung von dem Arm an diesen angeformt ist. Bei der Vorrichtung der Erfindung ist nur die ebene Fläche des Tellers über eine Zwischenschicht mit der Platte in Eingriff. Die Eingriffs- oder Angriffsfläche reicht daher nicht bis zum Rand der Platte. Stattdessen ist an dem Montageteil seitlich ein sich zum Plattenrand hin erstreckender Arm angeformt, an den der Anschraubteil entsprechend der Position des Tragelements angeformt ist. Dabei ist wesentlich, daß die Halter nur auf derselben Seite der Platte angreifen und daher die Platte einseitig getragen wird. Auf der anderen Plattenseite befinden sich daher keine Arme zur Gewichtsübertragung auf das Tragelement, was ästhetisch vorteilhaft wirkt. Damit entfällt bei der Montage die Verbindung eines Deckelteils mit dem Anschraubteil, und der Anschraubteil kann vereinfacht werden, da er nur für das Anschrauben an dem Tragelement eingerichtet ist, aber nicht mehr für die Verschraubung mit dem Deckelteil.

Die dadurch bedingte Vereinfachung des Anschraubteils ermöglicht seine Verkleinerung. Dadurch können nicht nur Herstellungskosten gespart werden, sondern die Breite des Spaltes zwischen Plattenkante und Tragelement kann verringert werden. Die einseitige Halterung der Platte erlaubt es bei vorgesetzter Montage, d.h. bei seitlich gegen die Plattenebene versetzten Tragelementen, die Breite des Plattenspaltes beliebig zu verengen. Der genannte Teller ist an dem Montageteil angeformt und hat vorzugsweise einen kreisbogenförmigen Umriss, kann aber auch einen anderen, z.B. eckigen Umriss haben. Er hat eine ebene Fläche, die über eine elastomere Ringscheibe oder eine Klebeschicht an der Platte angreift.

Nach einer bevorzugten Ausführungsform der Erfindung liegt der Schnittpunkt zwischen der Achse des Arms und der Achse des Anschraubteils innerhalb des Anschraubteils. Die Achse des Anschraubteils und die Achse des Montageteils verlaufen im allgemeinen parallel zueinander und stehen senkrecht auf der Achse des Arms.

Bei einer weiteren Ausführungsform der erfindungsgemäßen Vorrichtung ist an dem Anschraubteil ein zweiter Arm mit einem zweiten Montageteil angeformt, wobei die Achsen beider Arme auf derselben Geraden liegen. Dieser Doppelarmhalter greift an zwei benachbarten Platten an und stützt sie an einem Tragelement, z.B. einem Pfosten ab. Dabei kann das Tragelement in der Plattenebene zwischen den Platten angeordnet sein. Die Anschraubung an dem Tragelement kann mit oder ohne Zwischenlage eines Adapters erfolgen. Der Doppelarmhalter eignet sich auch für die vorgesetzte Montage. Hierzu ist der Anschraubteil nach beiden Seiten gleich ausgebildet, so daß die Anschraubung nach Umsetzen des Adapters nach außen auch an einem vorgesetzten Tragelement erfolgen kann.

Vorzugsweise verläuft der Arm des montierten Halters mit Abstand zur Platte. Durch diese Anordnung des Arms kann der Anschraubteil vorteilhaft zum Tragelement positioniert werden, insbesondere, wenn sich dieses in der Plattenebene zwischen den Platten befindet.

Im allgemeinen erstreckt sich der Arm mit dem Anschraubteil über den Rand der Platte hinaus. Dies ist der Fall, wenn sich das Tragelement, z.B. der Pfosten, in der Plattenebene zwischen zwei Platten befindet.

Vorzugsweise ist der Anschraubteil für die Aufnahme eines Adapters zur Anpassung an unterschiedliche Querschnitte oder Formen des Tragelements eingerichtet. Der gleiche Halter kann daher unter Benutzung verschiedener Adapter z.B. für Rundrohr- oder Eckigrohrpfosten oder auch für spezielle Systempfosten benutzt werden.

In dem Anschraubteil und gegebenenfalls in dem Adapter kann eine Gewindebohrung für einen Gewindestift enthalten sein. Die Gewindebohrung mit dem Gewindestift dient zur Arretierung bzw. Verdrehsicherung des Halters gegenüber dem Tragelement bzw. dem Adapter.

Bei einer Ausführungsform der erfindungsgemäßen Vorrichtung umfaßt der Montageteil einen dem Teller auf der anderen Seite der Platte gegenüberliegenden zweiten Teller, der durch eine Bohrung in der Platte mit dem Teller des Halters verschraubbar ist. Durch die Verschrauhung wird der Halter an der Platte lösbar angebracht. Zwischen der Platte und den Tellern sind gummielastische Ringscheiben angeordnet, um eine Beschädigung der Platte durch Kontakt mit den metallischen Tellern zu vermeiden. Vorzugsweise ist eine axiale Gewindebuchse innenseitig an den Teller des Halters angeformt oder in den Teller eingesetzt und enthält der zweite Teller eine axiale Gewindebohrung, in die ein Gewindebolzen eingeschraubt ist, der mit der Gewindebuchse verschraubt ist, so daß der Halter an der Platte lösbar befestigt ist. Wenn die Gewindebuchse in den Teller durch Einschrauben in eine axiale Bohrung eingesetzt ist, kann die aus dem Teller innenseitig vorstehende Länge der Gewindebuchse durch mehr oder weniger tiefes Einschrauben variiert und dadurch der Plattendicke angepaßt werden. Diese vorstehenden Gewindebuchsen erleichtern die Montage der Platte, da diese nach Anbringung der Halter an den Tragelementen mit ihren Bohrungen auf die Gewindebuchsen aufgesteckt und dann die Halter nacheinander verschraubt werden können. Bei dieser Ausführungsform mit axialer Gewindebuchse kann der Halter nicht nur an in der Plattenebene zwischen den Platten angeordneten Tragelementen, sondern auch an seitlich versetzten Tragelementen (vorgesetzte Montage) angeschraubt werden. Hierzu muß die axiale Gewindebohrung im Teller des Halters eine Durchgangsbohrung sein, und die Gewindebuchse muß auf der anderen Seite des Tellers vorstehen.

Bei einer weiteren Ausführungsform der Erfindung kann an der Gewindebuchse ein axialer Zapfen mit einem Nutenstein angebracht sein und der Teller innenseitig eine T-Nut enthalten, in der der Nutenstein geführt ist. Hierdurch können Toleranzen kompensiert werden, z.B. in den Abständen der Tragelemente oder in den Abständen der Plattenbohrungen vom Plattenrand. Bei einer einfacheren Ausführungsform können auch beide Teller eine axiale Gewindebohrung enthalten und mittels eines Gewindebolzens gegenseitig verschraubt sein. Hierbei entfällt die Gewindebuchse.

Bei einer anderen Ausführungsform ist der Montageteil auf beiden Seiten gleich ausgebildet, so daß die Platte auf jeder der beiden Seiten des Montageteils anschraubbar ist. Der Halter kann daher in zwei um 180° um seine Längsachse gedrehten Lagen zum Einsatz kommen. Bei passender Ausbildung des Anschraubteils kann der Halter daher für zwischengesetzte und vorgesetzte Montage zum Einsatz kommen. Zweckmäßigerweise ist bei dieser Ausführungsform die axiale Gewindebohrung eine Durchgangsbohrung mit Senkungen an ihren beiden Enden. Die Verschraubung mit dem Teller auf der anderen Seite der Platte ist daher bei beiden Halterlagen mit der gleichen Senkkopfschraube möglich.

Bei einer anderen Ausführungsform der erfindungsgemäßen Vorrichtung umfaßt der Montageteil einen in der Platte fixierten Hinterschnittanker mit aus der Platte vorstehendem Gewindebolzen und enthält der Teller des Halters eine axiale Bohrung mit eingesetzter Hülsenmutter, die mit dem Gewindebolzen verschraubt ist. Vorteilhaft bei dieser Ausführung ist es, daß auf der den Haltern abgewandten Seite der Platte keine Metallteile vorstehen. Bei entsprechend symmetrischer Ausbildung des Tellers des Halters ist es auch hier möglich, den Halter um 180° um die Armachse geschwenkt zu montieren. Der Halter kann somit für zwischengesetzte oder vorgesetzte Montage zum Einsatz kommen.

Bei einer weiteren Ausführungsform der erfindungsgemäßen Vorrichtung ist der Montageteil des Halters durch wenigstens eine Klebeschicht mit der Platte verbunden. Dabei kann der Teller nur mit der Außenseite der Platte verklebt sein. Es ist aber auch eine abgestufte Verklebung mit der Platte möglich. Dabei kann eine Ringfläche des Tellers mit der Außenseite der Platte verklebt sein, während ein über die Ringfläche vorstehender zentraler Teil stirnseitig mit einer gegenüber der Außenseite vertieften Fläche innerhalb der Platte verklebt ist.

Vorzugsweise enthält der mit der Platte verklebte Montageteil eine Gewindebohrung und enthält der nicht verklebte Montageteil eine Durchgangsbohrung und ist mittels einer Schraube mit dem verklebten Montageteil verschraubt. Der Arm ist bei dieser Ausführung an dem nicht verklebten Montageteil angeformt. Zwischen dem nicht verklebten Montageteil und der Glasplatte kann eine elastomere Ringscheibe angeordnet sein. Diese Elastomerscheibe wird beim Aufschrauben des nicht verklebten Montageteils auf das verklebte Montageteil etwas komprimiert. Dadurch wird die Klebefuge gegen die äußere Atmosphäre abgedichtet. Außerdem wird bei stossartigen Druckeinwirkungen auf die Glasplatte die Bruckgefahr verringert.

Zweckmäßigerweise liegt der Durchmesser X der Teller in dem Bereich von etwa 40 bis 80 mm. Die radiale Überdeckung Z der Teller über den Rand der Plattenbohrung beträgt mindestens 10 mm, vorzugsweise liegt sie in dem Bereich von 15 bis 30 mm. Anstelle des zweiten Tellers kann auch eine in der Plattenbohrung angeordnete Senkkopfmutter zum Einsatz kommen. Der Abstand R zwischen dem Rand der Plattenbohrung und dem Rand der Platte beträgt zweckmäßigerweise mindestens 45 mm. Vorzugsweise liegt er je nach Ausführung in dem Bereich von 50 bis 200 mm.

Die Teller können außenseitig eine Ausnehmung aufweisen, in die ein plattenförmiger Körper eingesetzt ist. Dieser plattenförmige Körper kann als Zierelement dienen oder eine Information, z.B. ein Firmenlogo oder dergl. enthalten.

Mit Hilfe der erfindungsgemäßen Halter kann der Spalt zwischen den sich gegenüberliegenden Kanten zweier benachbarter Platten wesentlich verringert werden. Dieser Spalt kann auch durch ein Dichtungsprofil aus weichelastischem Material verschlossen werden.

Der Arm des erfindungsgemäßen Halters und der Übergang von dem Arm zu dem Anschraubteil haben keine gebrochene (d.h. unstetig seine Richtung ändernde) Form. Der Arm und der genannte Übergang kann seine Richtung vielmehr kontinuierlich ändern. Sie können z.B. bogenförmig mit Krümmung nur nach einer Seite oder S-förmig mit Krümmung nach zwei Seiten gekrümmt sein, wie z.B. in den Figuren 11 und 13 gezeigt ist. Die Erfindung erstreckt sich somit auf Halter, deren Arm(e) geradlinig und/oder stetig gekrümmt ausgebildet sein kann bzw. können. Mit den erfindungsgemäßen Haltern können daher auch zwei Platten unter einem anderen Winkel als 180° zueinander gehalten werden, etwa unter einem Winkel von 90°, wie mit dem Halter nach Figur 17, jedoch mit stetigen Krümmungen anstelle der Abknickungen der Arme.

Die Aufgabe wird bei dem eingangs genannten Halter erfindungsgemäß auch dadurch gelöst, daß zwischen dem Anschlußteil und dem Adapter eine Steckverbindung besteht. Das Stecksystem erlaubt die Verwendung des Halters für vertikal oder horizontal zu haltende Platten, wobei der Adapter bei den beiden Plattenlagen um 90° gedreht an dem Tragelement anzubringen, z.B. anzuschrauben ist. Durch das Stecksystem können die Platten einfach ausgewechselt oder z.B. zwecks Reinigung kurzzeitig aus den am Tragelement verbleibenden Adaptern entnommen werden. Bei unterschiedlichen Tragelementen, wie z.B. Rohrpfosten, Lochwände oder geschlitzte Tragschienen, kann der Halter mit einem für die Anbringung an dem jeweiligen Tragelement eingerichteten Adapter kombiniert werden.

Nach der bevorzugten Ausführungsform der Erfindung ist die Steckverbindung durch wenigstens einen Steckzapfen an dem Anschlußteil und wenigstens eine Steckfassung in dem Adapter gebildet. Dabei kann der Querschnitt der Stecker und Steckfassungen unterschiedlich sein, z.B. viereckig oder kreisrund. Es ist auch möglich, anstelle eines oder mehrerer Steckzapfen an dem Anschlußteil eine zylindrische Steckbuchse anzuordnen und in dem Adapter eine entsprechend zylindrische Steckbuchsenfassung vorzusehen. Ebenso wie bei einem Anschlußteil mit einem zylindrischen Steckzapfen und einem Adapter mit eine zylindrischen Steckfassung kann der Halter dann gegenüber dem an dem Tragelement angebrachten Adapter stufenlos gedreht werden, so daß beliebige Neigungen der Platte gegenüber dem Tragelement einstellbar sind, wenn die Platte nur durch zwei sich an dem Plattenrand gegenüberliegende Halter gehalten wird.

Nach der bevorzugten Ausführungsform der Erfindung ist zur Sicherung der Steckverbindung der Anschlußteil durch eine Schraube mit dem Adapter in dem Steckeingriff festgelegt. Hierzu hat der Adapter eine Gewindebohrung und ist die in diese Gewindebohrung eingeschraubte Schraube mit ihrem Kopf auf dem Anschlußteil abgestützt. Die Achse der Gewindebohrung ist im allgemeinen parallel den Steckzapfen. Bei einer anderen Ausführungsform kann die Steckfassung und der zugehörige Steckzapfen Querbohrungen zur Aufnahme eines Sicherungsstiftes aufweisen. Der-Sicherungsstift kann ein Gewindestift und die Querbohrung des Steckzapfens eine Gewindebohrung sein. Durch Einschrauben des Sicherungsstiftes in die Gewindebohrung des Steckzapfens ist die Steckverbindung gegen Trennung gesichert. Der Sicherungsstift kann auch z.B. ein konischer Kerbstift sein, der in die Querbohrungen eingeschlagen ist und die Steckverbindung dauerhaft sichert. Die Sicherung der Steckverbindung kann auch durch Verklebung zwischen Steckzapfen und Steckfassung erreicht werden.

Bei einer bevorzugten Ausführungsform des erfindungsgemäßen Halters ist der Adapter für die Anbringung an dem Tragelement eingerichtet. Derselbe Halter kann daher mit verschiedenen für die Anbringung an unterschiedlichen Tragelementen eingerichteten Adaptern kombiniert werden. Vorzugsweise ist in dem Adapter eine Anschraubbohrung enthalten. Die vorzugsweise mittig in dem Adapter angeordnete Anschraubbohrung dient im allgemeinen zur Anschraubung des Adapters an einem Pfosten oder dergl. und hat vorzugsweise einesenkung zur Aufnahme des Schraubenkopfes. Bei einer anderen Ausführungsform hat der Adapter wenigstens einen Haken zur Anbringung an einem gelochten oder mehrfach geschlitzten Tragelement. Das Tragelement kann eine Lochwand oder eine mit Schlitzen verseheneTragschiene sein. Dieser Adapter kommt vorzugsweise für freitragende Glasböden zur Anwendung.

Vorzugsweise sind der Montageteil an dem einen Ende und der Anschlußteil an dem anderen ende eines Arms angeformt. Der Montageteil kann entsprechend der Armlänge einen mehr oder weniger großen Abstand von dem Plattenrand haben, so daß insbesondere Glasböden die Belastung ohne Bruchgefahr tragen können.

Zweckmäßigerweise weist der Anschlußteil eine plattenförmige Anformung auf, auf der die Steckzapfen ausgebildet sind. Dabei verläuft die plattenförmige Anformung im allgemeinen etwa rechtwinklig zu dem Arm. Die Steckzapfen sind auf der dem Montageteil abgewandten Seite der Plattenanformung angeordnet. Die rechtwinklig zum Arm stehende plattenförmige Anformung kann zur Ebene der Glasplatte hin vor dem Glasplattenrand abgewinkelt sein (Plattenanbringung zwischen den Pfosten) oder sie kann von der Glasplattenebene weg abgewinkelt sein (Glasplattenmontage vor den Pfosten).

Bei einer anderen Ausführungsform des erfindungsgemäßen Halters ist der Adapter in einer an dem Tragelement drehbar gelagerten Rolle angebracht. Die Rolle hat zweckmäßigerweise eine Ausnehmung, in die der Adapter eingreift. Der Boden der Ausnehmung enthält eine Gewindebohrung, und der Adapter ist mittels einer Schraube in der Ausnehmung befestigt. Durch den Eingriff des Adapters in die Ausnehmung der Rolle wird der Halter mit Adapter zusätzlich zur Schraubverbindung unterstützend gehalten. Die Rolle ist dabei zweckmäßig an der Wand durch einen Rollenhalter angebracht, bei dem die Rolle zwischen zwei Laschen drehbar gehalten ist. Diese schwenkbare Anbringung der Glasplatte kann bei Glasvordächern, Glasböden oder Glasplatten mit Solarmodulen zur Anwendung kommen. Insbesondere bei Glasdächern oder Glasplatten mit Solarmodulen kann deren Anbringung dadurch erleichtert werden, daß die Rolle in einem an dem Tragelement angebrachten Wandhalter mit oben offenem Rollenlager gehaltert ist. Das Glasdach bzw. die Solarplatte kann dann mit den vormontierten Haltern und Rollen einfach in die Wandhalterung eingesetzt werden.

Der Montageteil des Halters kann einen auf einer Seite der Platte angreifenden ersten Teller und einen auf der anderen Seite der Platte angreifenden zweiten Teller umfassen, wobei die Teller durch eine Bohrung in der Platte hindurch verschraubbar sind. Durch die Verschraubung wird der Halter an der Platte lösbar angebracht. Zwischen der Platte und den Tellern sind gummielastische Ringscheiben angeordnet, um eine Beschädigung der Platte durch Berührung mit den metallischen Tellern zu vermeiden. Vorzugsweise ist eine axiale Gewindebuchse innenseitig an dem Teller des Halters angeformt oder in den Teller eingesetzt und hat der zweite Teller einen axialen Schraubteil, der mit der Gewindebuchse verschraubt ist, so daß der Halter an der Platte lösbar befestigt ist.

Bei einer anderen Ausführungsform des erfindungsgemäßen Halters ist in der Platte ein Hinterschnittanker mit aus der Platte vorstehendem Gewindeteil angebracht und enthält der Montageteil eine axiale Bohrung mit eingesetzter Hülsenmutter, die mit dem Gewindeteil des Hinterschnittankers verschraubt ist. Vorteilhaft bei dieser Ausführung ist es, daß auf der dem Halter abgewandten Seite der Glasplatte keine Metallteile vorstehen. Diese Ausführungsform ist daher für Glasböden vorteilhaft.

Bei einer weiteren Ausführungsform des erfindungsgemäßen Halters ist sein Montageteil durch wenigstens eine Klebeschicht mit der Platte verbunden. Dabei kann der mit der Glasplatte verklebte Teil von einem elastomeren Ring umgeben sein, der durch den umgebenden Teil des Montageteils komprimiert wird, wodurch die Klebeschicht gegen die äußere Atmosphäre abgedichtet ist.

Vorzugsweise weist der mit der Platte verklebte Montageteil rückseitig einen axialen Gewindezapfen auf und enthält der Montageteil eine Durchgangsbohrung mit einer Hülsenmutter, die mit dem Gewindezapfen verschraubt ist. Der Arm ist bei dieser Ausführung an dem nicht verklebten Montageteil angeformt. Zur Montage wird zunächst das innere Montageteil mit der Platte verklebt. Nach Erreichen der erforderlichen Festigkeit der Klebeschicht kann der Halter mit Zwischenlage des Elastomerrings mittels Hülsenmutter mit dem verklebten Montageteil verschraubt werden.

Der weitere Aspekt der Aufgabe wird bei der genannten Vorrichtung erfindungsgemäß dadurch gelöst, daß ein den ersten Montageteil umfassender Teil der Halter oder die gesamten Halter relativ zur Platte in Steckrichtung verschiebbar und arretierbar sind. Die Erfindung stellt ein neues Schiebe-Stecksystem dar, das bei der einteiligen wie auch der zweiteiligen Ausführung des Halters zur Anwendung kommt. Bei der zweiteiligen Ausführungsform besteht der auf einer Seite der Platte angreifende Halter aus zwei relativ zueinander um maximal einen Schiebeweg SW verschiebbaren Teilen. Die Bildung der Steckverbindung zwischen dem ersten Montageteil des Halters und dem Tragelement wird durch diese gegenseitige Verschiebbarkeit der beiden Halterteile erreicht. Bei der einteiligen Ausführungsform wird die Steckverbindung zwischen Halter und Tragelement mit Hilfe der Verschiebbarkeit des gesamten einteiligen Halters gegenüber der Platte erreicht. Durch das Schiebe-Stecksystem kann z.B. eine Glasplatte mit vier vormontierten erfindungsgemäßen Haltern zwischen zwei Pfosten mit den entsprechenden, an ihnen vormontierten Steckeinrichtungen montiert werden. Unter der Arretierung ist die Festlegung des verschiebbaren Halterteils bzw. Halters in einer bestimmten, aber beliebigen Position auf dem Verschiebungsweg zu verstehen, insbesondere in der vollständig ausgeschobenen Position, bei der die Steckverbindung maximal in Eingriff ist.

Vorzugsweise sind die beiden Montageteile des Halters durch einen Arm verbunden. Hierbei kann der Arm mit einem Montageteil fest verbunden, z.B. an diesem angeformt sein und an dem anderen Montageteil lösbar angebracht sein, so daß nach dem Lösen der gegenseitigen Festlegung eine Verschiebung des Arms gegenüber diesem Montageteil möglich ist, wodurch z.B. die Steckverbindung in Eingriff gebracht oder auch wieder getrennt werden kann. Bei der oben genannten einteiligen Ausführungsform des Halters sind beide Montageteile mit dem Arm fest verbunden. Die für den Eingriff und die Trennung der Steckverbindung erforderliche Verschiebung des ersten Montageteils erfolgt dann dadurch, daß der Halter insgesamt gegenüber der Platte verschoben wird. Wie dies im einzelnen geschieht, wird weiter unten näher beschrieben.

Vorzugsweise ist die Summe der maximalen Schiebewege SW von zwei an verschienen Tragelementen angreifenden Haltern wenigstens gleich der Stecktiefe ST der Steckverbindung an einem Tragelement, 2 SW ≧ ST. Um z.B. eine Platte mit vier vormontierten erfindungsgemäßen Schiebe-Steckhaltern zwischen zwei Pfosten anzubringen, werden die verschiebbaren Teile der Halter bzw. die Halter insgesamt, wenn sie einteilig sind, so weit wie möglich eingeschoben (aufeinander zu bewegt). Dann werden die Steckverbindungen der Halter, die sich an derselben senkrechten Plattenkante befinden, mit den zugehörigen Steckteilen am Pfosten hergestellt, indem die Steckzapfen in die entsprechenden Steckfassungen maximal eingesteckt werden. Dann werden die verschiebbaren Teile aller Halter bzw. bei einteiligen Haltern alle Halter in ihrer Gesamtheit an beiden Kanten der Platte so weit wie möglich ausgeschoben (voneinander weg bewegt) und dabei die Steckverbindungen an dem anderen Pfosten hergestellt. Durch Arretierung der Verschiebungsbewegung in den so erreichten Extremstellungen wird diese Steckmontage fixiert. Dies kann vorzugsweise durch Anziehen der Verschraubung von zwei einander gegenüberliegenden Tellern beiderseits der Platte geschehen, die Teil des zweiten Montageteils sind.

Während der eine Teil der Steckverbindung auf dem ersten Montageteil des Halters ausgebildet ist, ist der andere Teil der Steckverbindung an einem an dem Tragelement angebrachten Adapter vorgesehen. Es ist aber auch möglich, daß dieser andere Teil der Steckverbindung an dem Tragelement, z.B. dem Pfosten, direkt ausgebildet ist. Die Steckverbindung wird gebildet einerseits durch wenigstens einen Stecker und andererseits durch diesem Stecker angepaßte Steckfassung(en). Vorzugsweise stellt der an dem ersten Montageteil ausgebildete Teil der Steckverbindung eine Steckfassung dar und ist der andere Teil der Steckverbindung ein Stecker, der sich vorzugsweise auf einem an dem Tragelement angeschraubten Adapter befindet.

Bei der bevorzugten Ausführungsform der erfindungsgemäßen Vorrichtung ist der Arm an dem (für die Steckverbindung mit dem Tragelement eingerichteten) ersten Montageteil angeformt, umfaßt der zweite Montageteil einen ersten Teller mit einer Führungsnut auf seiner Innenseite und ist der Arm in der Führungsnut verschiebbar und arretierbar. Der Arm ist in der Führungsnut verschiebbar und damit die Steckverbindung zwischen dem ersten Montageteil und dem Adapter bzw. Tragelement herstellbar, wenn die Verschraubung des zweiten Montageteils mit der Glasplatte soweit gelockert ist, daß die Verschiebungsbewegung des Arms freigegeben ist. Zweckmäßigerweise ist zwischen dem ersten Teller (einschließlich des Arms in seiner Führungsnut) einerseits und der Glasplatte andererseits eine elastomere Ringscheibe angeordnet, die bei der Verschraubung des zweiten Montageteils komprimiert wird, wodurch der zweite Montageteil und damit der Halter insgesamt an der Platte befestigt und zugleich der Arm in der Führungsnut festgelegt wird. Zweckmäßigerweise hat der Arm an seinem freien Ende ein Langloch und der erste Teller eine in das Langloch ragende, die Verschiebung des Arms begrenzende Buchse. Die Länge des Langlochs bestimmt zusammen mit der Buchse den maximalen Verschiebungsweg des ersten Montageteils.

Bei einer geänderten Ausführungsform kann zur Arretierung eine Hülsenmutter in den ersten Teller eingesetzt und mit einem an oder in der Platte befestigen, einen Gewindezapfen aufweisenden Bauteil verschraubt sein. Diese Ausführung kommt zur Anwendung, wenn die Platte keine Durchgangsbohrung enthält, sondern der genannte Bauteil ein in der Platte befestigter Hinterschnittanker oder ein an der Platte angeklebter Bauteil ist. Bei einer weiteren Ausführungsform hat die Buchse ein Innengewinde und ist ein auf der anderen Seite der mit einer Durchgangsbohrung versehenen Platte angreifender zweiter Teller mit Gewindezapfen mit der Gewindebuchse verschraubt. Durch die Verschraubung der beiden Teller wird der Halter an der Platte befestigt und zugleich der Arm und damit das an ihm angeformte erste Montageteil in einer bestimmten Ausschubstellung festgelegt. Durch eine gewisse Lockerung der Verschraubung wird die Klemmung des Arms durch die elastomere Ringscheibe soweit verringert, daß der Arm in der Führungsnut wieder verschiebbar ist.

Bei einer anderen Ausführungsform umfaßt der zweite Montageteil einen ersten Teller mit einer innenseitigen, in Steckrichtung verlaufenden T-Nut und eine Gewindebuchse mit einem daran angebrachten, in der T-Nut geführten Nutenstein und ist ein zweiter, auf der anderen Seite der Platte angreifender Teller mit Gewindezapfen durch eine Plattenbohdung hindurch mit der Gewindebuchse verschraubt. Bei dieser Ausführungsform ist nicht nur der Arm mit dem ersten Montageteil, sondern auch der am Arm angebrachte erste Teller in Steckrichtung verschieblich, wenn die Verschraubung zwischen den Tellern soweit gelöst ist, daß die von der elastomeren Ringscheibe zwischen Glasplatte und erstem Teller ausgeübte Reaktionskraft überwunden werden kann. Der maximale Schiebeweg SW ist durch die Länge der T-Nut und die Dimension des Nutensteins begrenzt.

Bei einer weiteren Ausführungsform des erfindungsgemäßen Schiebe-Stecksystems umfaßt der zweite Montageteil einen an der Platte angreifenden ersten Teller und einen diesem Teller auf der anderen Seite der Platte gegenüberliegenden zweiten Teller, der mit dem ersten Teller durch eine Langlochbohrung hindurch verschraubt ist, die sich in der Platte in Steckrichtung erstreckt. Bei dieser Ausführung ist der Halter insgesamt nach entsprechender Lockerung der Verschraubung in Steckrichtung hin und her verschiebbar, so daß die Steckverbindungen zunächst an dem einen Tragelement und dann durch Ausschieben der Halter in den Langlöchern an dem anderen Tragelement in Eingriff gebracht werden können. Der hierbei verfügbare maximale Schiebeweg SW jedes Halters wird durch die Länge des Langlochs in der Platte bestimmt, die zweckmäßig durch eine Langloch-Glasschutzbuchse ausgekleidet ist. Auch hier wird die Verschiebungsposition des Halters dadurch arretiert und entarretiert, daß man die Verschraubung anzieht bzw. ausreichend lockert.

Schließlich kann der Arm bei einer weiteren Ausführungsform aus zwei teleskopierbaren Armteilen bestehen, die in allen Ausziehstellungen arretierbar sind. Auch hierdurch kann der erste Montageteil soweit verschoben werden, daß dadurch die Steckverbindung hergestellt bzw. getrennt wird.

Nach der bevorzugten Ausführungsform der erfindungsgemäßen Vorrichtung ist zwischen der Platte und dem zweiten Montageteil und ggfs. dem Arm wenigstens eine elastomere Ringscheibe angeordnet. Die Ringscheibe zwischen der Platte und den Tellern schützt nicht nur die Platte vor Beschädigung durch Kontakt mit dem metallischen zweiten Montageteil, sondern bewirkt durch die bei genügender Kompression ausgeübte Reaktionskraft die Festlegung der verschiebbaren Teile. Außerdem ermöglichen die elastomeren Ringscheiben eine begrenzte Schwenkbarkeit des ersten Montageteils um kleine Winkel, so daß hierdurch Toleranzen in der gegenseitigen Positionierung der beiden Teile der Steckverbindung kompensiert werden können. Darüber hinaus kann auch der einen Steckteil tragende Adapter z.B. durch eine elastomere Scheibe an dem Tragelement montiert sein, so daß auch von dieser Seite Toleranzen ausgeglichen werden können.

Das erfindungsgemäße Schiebe-Stecksystem kommt bei Haltern zum Einsatz, dessen zweiter Montageteil mit Abstand vom Plattenrand an der Platte angreift. Dieser zweite Montageteil stellt einen Punkthalter dar, der eine Durchbohrung der Platte (mit Tellern auf beiden Seiten der Platte), eine einseitige Ausnehmung der Platte (zur Befestigung eines Hinterschnittankers) oder keine Schwächung der Platte (wenn der zweite Montageteil auf die Platte aufgeklebt ist) erfordert.

Die weitere Aufgabe wird bei der genannten Halterungsvorrichtung erfindungsgemäß dadurch gelöst, daß der erste Teller des Montageteils eine außenseitig offene Aussparung zur Aufnahme eines elektrischen oder elektronischen Geräts enthält und der Anschraubteil, der Arm und der erste Teller eine Ausnehmung für die Aufnahme wenigstens eines Kabels haben. Der erfindungsgemäße Halter kann mit einem elektrischen oder elektronischen Gerät bestückt sein und kann dann je nach Art des Geräts eine zweite Funktion erfüllen. Das Gerät kann beispielsweise eine Lampe, ein Bewegungsmelder oder eine andere elektronische, z.B. photoelektrische Einrichtung sein. Der Halter hat damit Beleuchtungs-, Signalgebungs- oder Überwachungsfunktion, je nachden, welches Gerät in die Aussparung eingesetzt ist. Im allgemeinen wird man nur wenige oder einen Teil der an einem Geländer benutzten Halter mit der zusätzlichen Funktion ausstatten, z.B. bei einem Treppengeländer jeweils nur die beiden unterenunteren der eine Glasplatte haltenden vier Halter.

Nach der bevorzugten Ausführungsform der Erfindung umfaßt die Aussparung einen äußeren Teil zur wenigstens teilweisen Aufnahme des Gerätekopfes und einen inneren Teil zur Aufnahme des Gerätesockels. Der äußere Teil der Aussparung hat im allgemeinen einen größeren Durchmesser als der innere Teil und hat entsprechend der Dicke des Tellers eine begrenzte axiale Dimension. Beim Einsatz einer Lampe nimmt der äußere Teil den Glaskolben auf, während der Lampensockel in den inneren Teil eingreift. Vorzugsweise ist der innere Teil eine axiale Gewindebohrung zur Aufnahme einer Schraubfassung oder eines Schraubsockels. Zweckmäßigerweise ist det äußere Teil der Aussparung dem Lampenkopf angepaßt, wobei dieser aus Sicherheitsgründen mit der Außenseite des ersten Tellers etwa bündig abschließt.

Vorzugsweise ist der Zapfen des ersten Tellers ein Hohlzapfen, in den sich die Aussparung hinein erstreckt. In diesen Falle liegt der innere Teil der Aussparung teilweise in dem Hohlzapfen mit dem Vorteil, daß der erste Teller im wesentlichen nur den Kopf des Geräts bzw. der Lampe aufnimmt und daher entsprechend flach ausgebildet sein kann.

Vorzugsweise ist in der Aussparung eine Fassung zur lösbaren Anbringung des Geräts und/oder für den Anschluß des Geräts an mit dem Kabel verbundene Kontakte enthalten. Die Fassung besteht aus einem elektrisch isolierenden Werkstoff, z.B. Kunststoff oder Keramik. Sie hat zweckmäßigerweise Außengewinde und ist in den inneren Teil der Aussparung eingeschraubt. Die Kontakte sind an das Kabel anzuschliessen; die Fassung ist jeweils für das einzusetzende elektrische/elektronische Gerät spezifisch.

Zweckmäßigerweise enthält der Zapfen stirnseitig eine axiale Gewindebohrung und hat der zweite Teller einen Gewindezapfen für die Verschraubung mit der Gewindebohrung. Der Zapfen des ersten Tellers ist im allgemeinen so lang, daß er die Plattenbohrung wenigstens teilweise durchstößt. Nach der Anbringung der Halter an den Pfosten kann daher die zu montierende Glasplatte auf die Zapfen der Halter aufgesteckt werden, bevor die Verschraubung mit den zweiten Tellers erfolgt. Es ist natürlich auch möglich, daß der zweite Teller anstelle des Gewindezapfens eine axiale Gewindebohrung enthält, der Zapfen des ersten Tellers ein Außengewinde trägt und der zweite Teller auf diesen entsprechend langen Zapfen aufgeschraubt werden kann.

Vorzugsweise besteht die Ausnehmung wenigstens teilweise aus einer auf der Rückseite des Arms und des ersten Tellers verlaufenden Nut und trifft die Ausnehmung im Anschraubteil auf eine Bohrung in dem Tragelement zwecks Anschluß des Kabels an ein in dem Tragelement verlaufendes Versorgungs- oder Sammelkabel. Das Kabel wird in der Nut verlegt. Die Nut kann dann durch eine Schiene oder Platte abgedeckt werden.

Bei einer Ausführungsform der Halterungsvorrichtung ist der axiale Zapfen an den Teller angeformt. Hierbei ist im allgemeinen der Einsatz der separaten Fassung erforderlich, in die der Sockel des Geräts z.B. eingeschraubt werden kann.

Bei einer anderen Ausführungsform der Halterungsvorrichtung ist der Zapfen in den ersten Teller eingesetzt, dient der eingesetzte Zapfen selbst als Fassung für das Gerät und enthält er Kontakte für den Anschluß des Geräts an das Kabel. Der Zapfen besteht in diesem Falle vorzugsweise aus einem elektrisch isolierenden Kunststoff.

Schließlich wird eine Teilaufgabe bei der Halterungsvorrichtung erfindungsgemäß dadurch gelöst, daß der Arm aus zwei Teilen besteht, die gelenkartig verbunden und in unterschiedlichen Winkellagen zueinander feststellbar sind. Während der am Anschraubteil angeformte erste Armteil nach Anschrauben am Tragelement unbeweglich ist, kann der zweite Armteil mit dem Montageteil um die Gelenkachse geschwenkt und so in eine Schräglage zur Horizontalen gebracht werden, in der er parallel zur Treppenneigung oder zur Ober- oder Unterkante der zu montierenden Glasplatte verläuft. In dieser Lage wird der Armteil dann festgestellt, indem das Gelenk z.B. durch Anziehen der die beiden Gelenkteile verbindenden Schraube verstarrt wird. Durch die Parallelität des zweiten Armteils mit der Plattenoberkante und der Plattenunterkante erscheint das Treppengeländer ästhetisch vorteilhaft. Wichtiger ist aber noch, daß die Angriffspunkte der Montageteile der Halter an den Glasplatten im Treppenverlauf überall gleiche Abstände von den Plattenkanten haben können. Treppengeländer mit den erfindungsgemäßen Haltern, insbesondere längere Geländer mit Podesten, machen einen harmonischen Eindruck und ermöglichen die gleiche sichere Halterung aller Glasplatten.

Nach der bevorzugten Ausführungsform der Vorrichtung verläuft die Achse des Gelenks parallel zur Achse des Montageteils. Bei entsprechender Ausbildung des Montageteils kann die Vorrichtung auch um 180° um die Armachse gedreht montiert werden, so daß der gleiche Halter für zwischengesetzte und vorgesetzte Montage einsetzbar ist.

Vorzugsweise ist das Gelenk an einer Stelle des Arms angeordnet, die der Kante der montierten Platte etwa am nächsten liegt. Hierdurch ergibt sich die vorteilhafte Möglichkeit, nur den im Bereich der Platte befindlichen zweiten Armteil entsprechend der Ober- bzw. Unterkante der parallelogrammförmigen Platte zu neigen, während der zwischen der vertikalen Plattenkante und dem Pfosten liegende erste Armteil horizontal ausgerichtet bleibt.

Vorzugsweise ist bei dem an dem Tragelement angeschraubten Halter der Abknickwinkel α des Gelenks in dem Bereich von etwa -45° bis +45° zur Horizontalen feststellbar. Im allgemeinen wird der Treppenneigungswinkel in dem Bereich von 25° bis 40° liegen. Da sich der Schwenkbereich aus der Horizontalen nach oben und nach unten erstreckt, kann derselbe Halter an einem Pfosten für die Platte in Richtung der steigenden Treppe oder auch für die Platte in Richtung der fallenden Treppe benutzt werden.

Zweckmäßigerweise sind auf den Gelenkflächen beider Armteile Vorsprünge und Vertiefungen ausgebildet, so daß die Armteile in bestimmten Winkelstellungen zueinander drehfest zusammenspannbar sind. Hierdurch wird gewährleistet, daß die Gelenke auch unter dem erheblichen Gewicht der Glasplatten (bis zu 50 kg und mehr) sicher drehfixiert bleiben. Es ist aber auch möglich, die aufeinander liegenden Gelenkflächen als einfache Planflächen auszubilden, wenn durch den Spannbolzen ein für die Verstarrung des Gelenks ausreichender Preßdruck erzeugt wird.

Bei einer bevorzugten Ausführungsform der Vorrichtung tragen die Gelenkflächen eine Verzahnung, vorzugsweise eine solche mit radial verlaufenden Zähnen, die ineinandergreifend das Gelenk verstarren. Bei diesem Gelenk kann der Abknickwinkel α zwischen den beiden Armteilen stufenweise entsprechend dem Zahnabstand, z.B. in Stufen von 2° verändert werden. Bei einer anderen Ausführungsform ist das Gelenk ein Planflächengelenk mit Steckzapfen in der einen Planfläche (Gelenkfläche) und entsprechenden Steckfassungen in der anderen Planfläche.

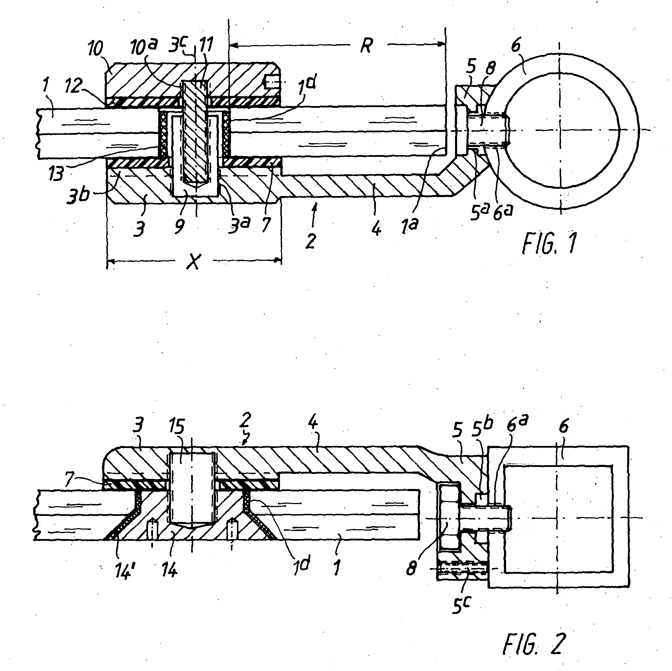

Die Erfindung wird nachfolgend an Hand der Zeichnung näher beschrieben. Es zeigen
Figur 1 eine erste Ausführungsform der Vorrichtung zur Halterung einer Glasplatte an einem Rundrohrpfosten;
Figur 2 eine zweite Ausführungsform der Vorrichtung zur Halterung der Glasplatte an einem Vierkantpfosten;

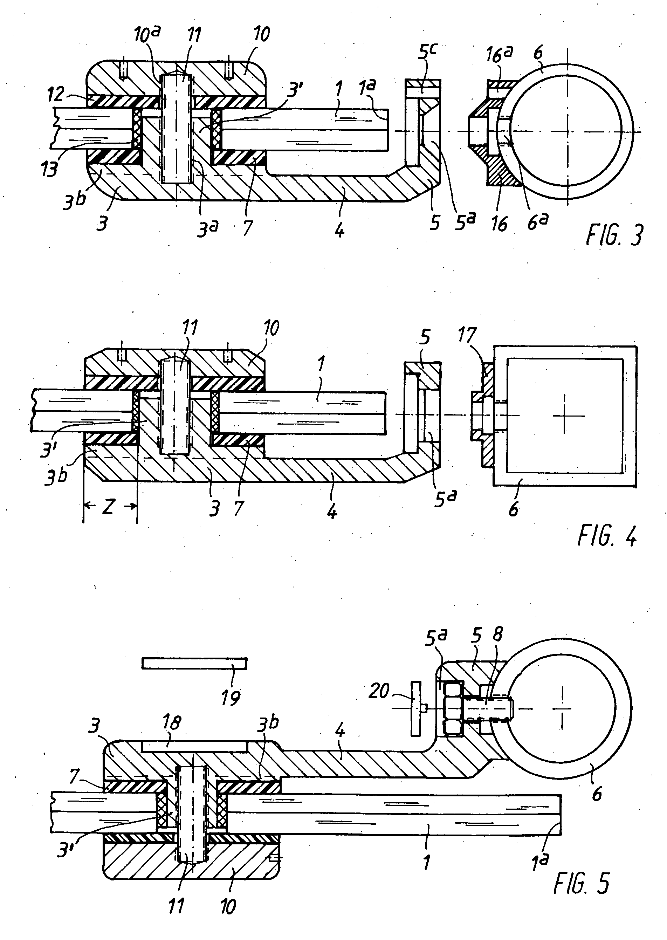

Figur 3 eine dritte Ausführungsform der Vorrichtung zur Halterung der Glasplatte an einem Rundrohrpfosten;
Figur 4 eine vierte Ausführungsform ähnlich wie die der Figur 3, jedoch zur Anschraubung an einem Vierkantrohr;
Figur 5 eine fünfte Ausführungsform der Vorrichtung zur Halterung der Glasplatte an einem vorgesetzten Rundrohrpfosten;

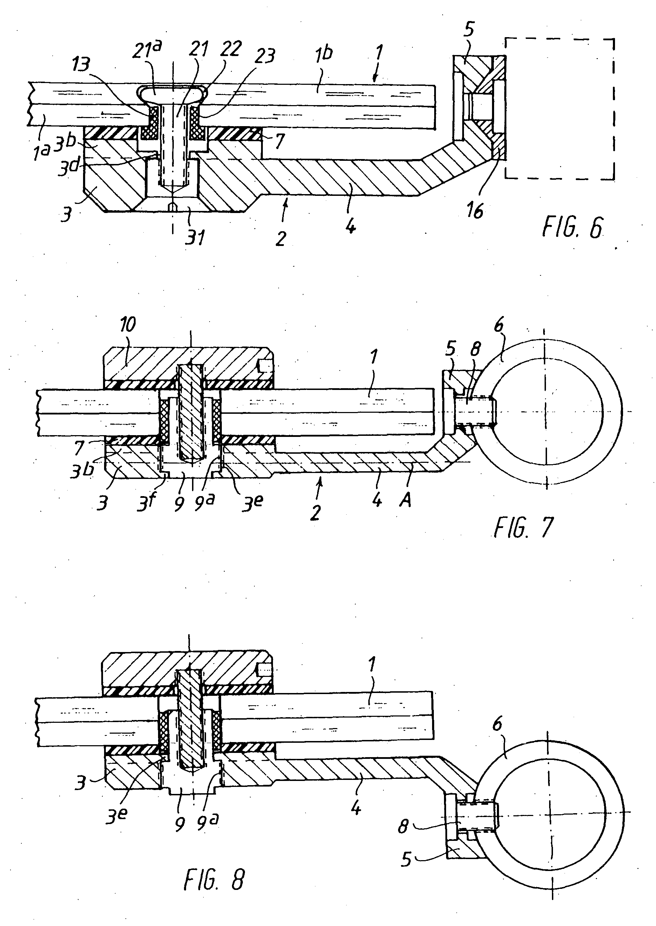

Figur 6 eine sechste Ausführungsform der Vorrichtung zur Halterung der Glasplatte an einem Vierkantpfosten, wobei der Halter mittels Hinterschnittanker an der Glasplatte befestigt ist;
Figur 7 eine siebente Ausführungsform der Vorrichtung zur Halterung der Glasplatte an einem Rundrohrpfosten, der sich in der Plattenebene befindet;
Figur 8 den in Figur 7 gezeigten Halter, jedoch zur Anbringung an einem gegen die Plattenebene seitlich versetzten Rundrohrpfosten;

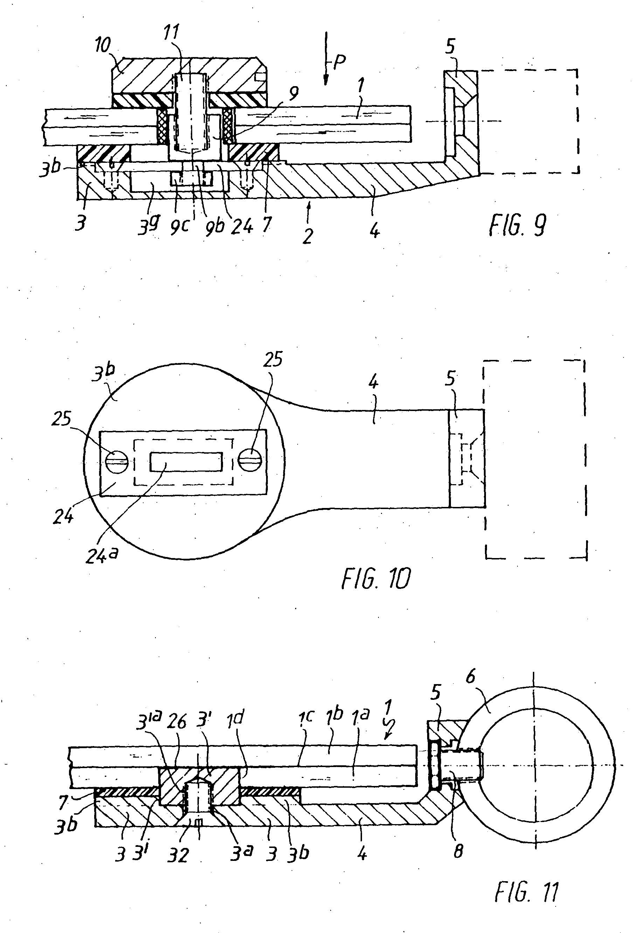

Figur 9 eine achte Ausführungsform der Vorrichtung zur Halterung einer Glasplatte an einem Vierkantpfosten, wobei die Glasplatte zum Ausgleich von Fertigungstoleranzen an dem Halter in einer Richtung beweglich ist;
Figur 10 eine Aufsicht des in Figur 9 gezeigten Halters in Richtung des Pfeils P;
Figur 11 eine neunte Ausführungsform der erfindungsgemäßen Vorrichtung zur Halterung der Glasplatte an einem Rundrohrpfosten;

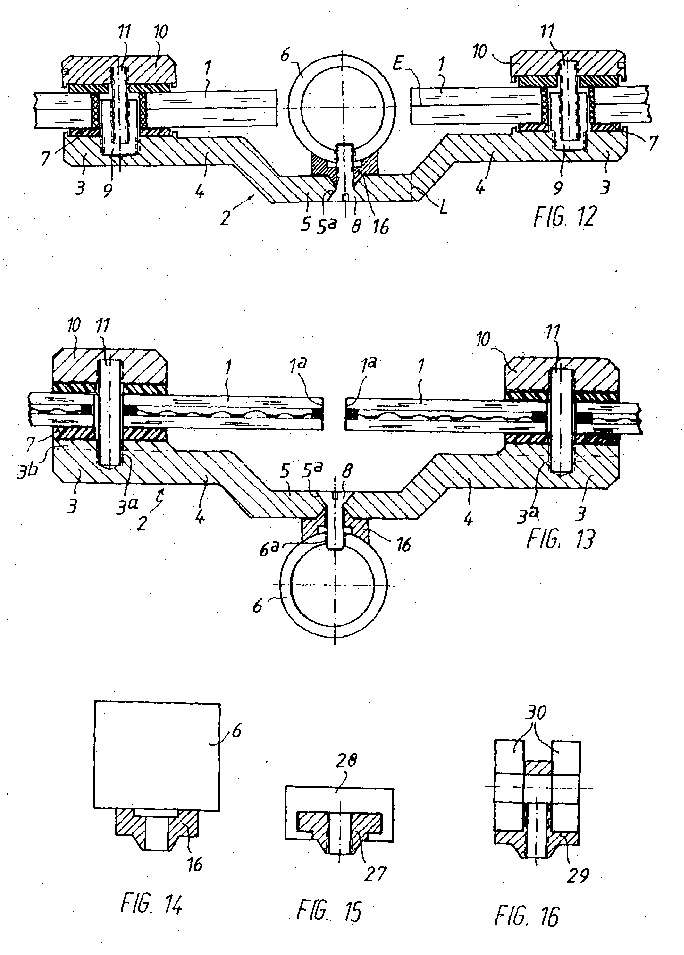

Figur 12 eine zehnte Ausführungsform der Vorrichtung mit zweiarmigem Halter zur Halterung von zwei Platten an einem in der Plattenebene angeordneten Rundrohrpfosten;
Figur 13 elfte Ausführungsform der Vorrichtung mit zweiarmigem Halter zur Anbringung an einem gegenüber der Plattenebene seitlich versetzten Tragelement;
Figur 14 den Querschnitt eines Adapters an einem Vierkantrohr;
Figur 15 den Querschnitt eines Adapters für eine T-Nutschiene;
Figur 16 den Querschnitt eines Adapters für einen Systempfosten;

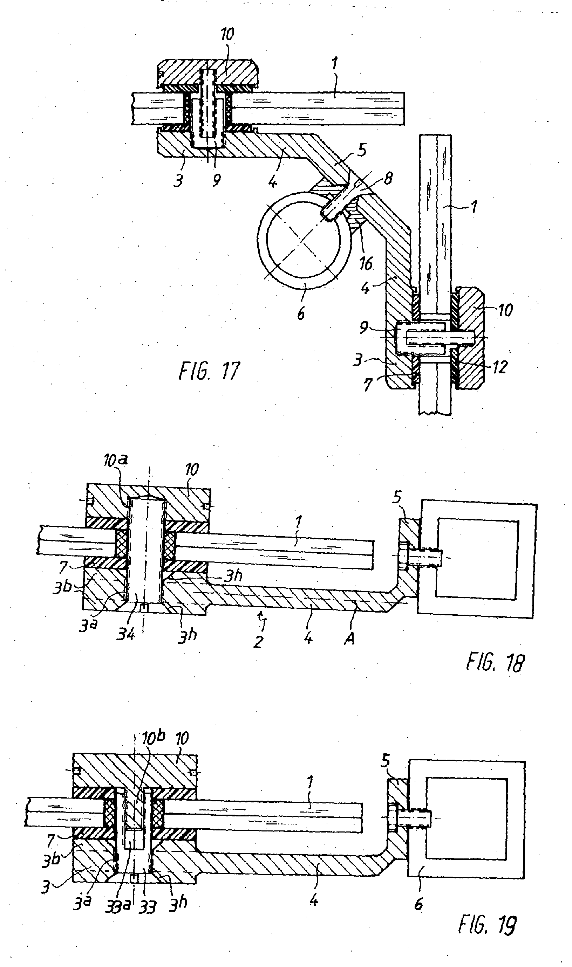

Figur 17 eine zwölfte Ausführungsform einer Vorrichtung mit zweiarmigem Halter analog zu Figur 12, jedoch mit einem Plattenwinkel von 90°;
Figur 18 und Figur 19 einen Halter mit Senkkopfschraube bzw. Senkkopfhülsenmutter;

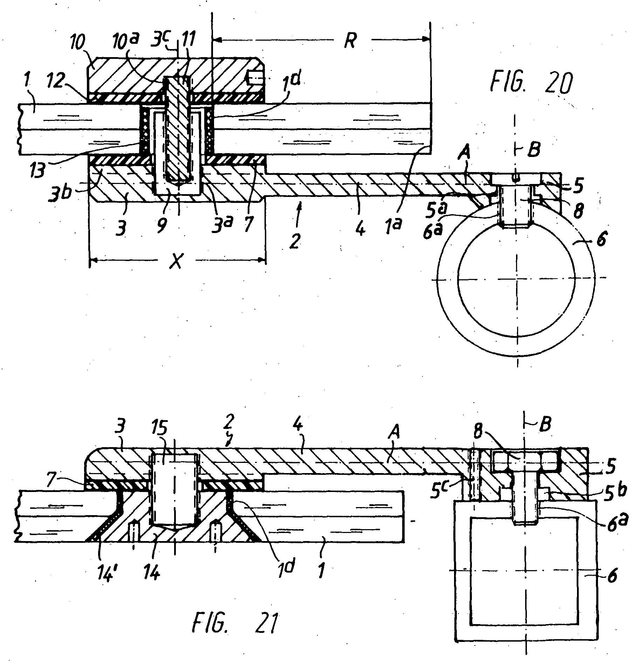

Figur 20 eine 13. Ausführungsform der Vorrichtung zur Halterung einer Glasplatte an einem Rundrohrpfosten;
Figur 21 eine 14. Ausführungsform der Vorrichtung zur Halterung der Glasplatte an einem Vierkantpfosten;

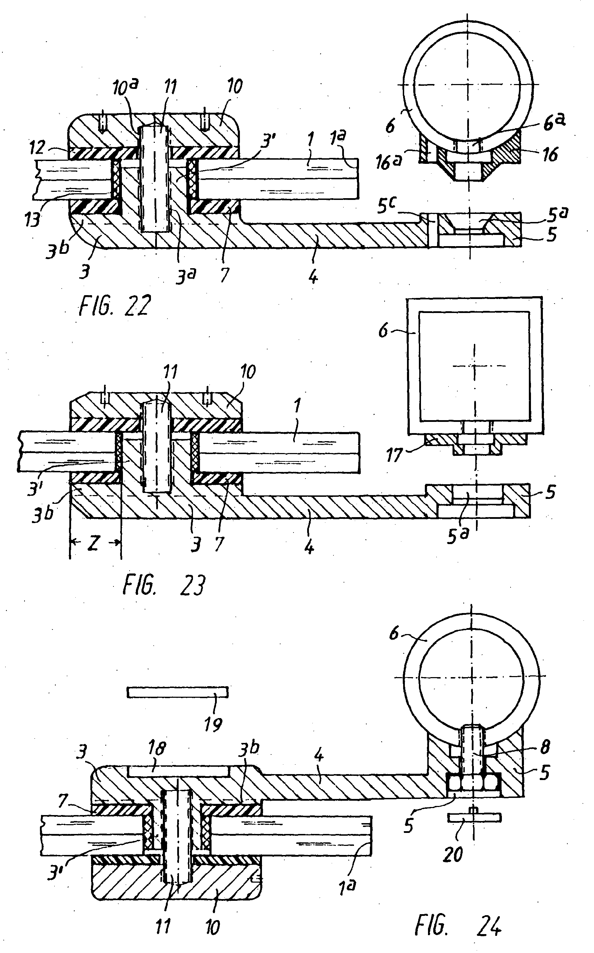

Figur 22 eine 15. Ausführungsform der Vorrichtung zur Halterung der Glasplatte an einem Rundrohrpfosten;
Figur 23 eine 16. Ausführungsform ähnlich wie die der Figur 3, jedoch zur Anschraubung an einem Vierkantrohr;
Figur 24 eine 17. Ausführungsform der Vorrichtung zur Halterung der Glasplatte an einem vorgesetzten Rundrohrpfosten;

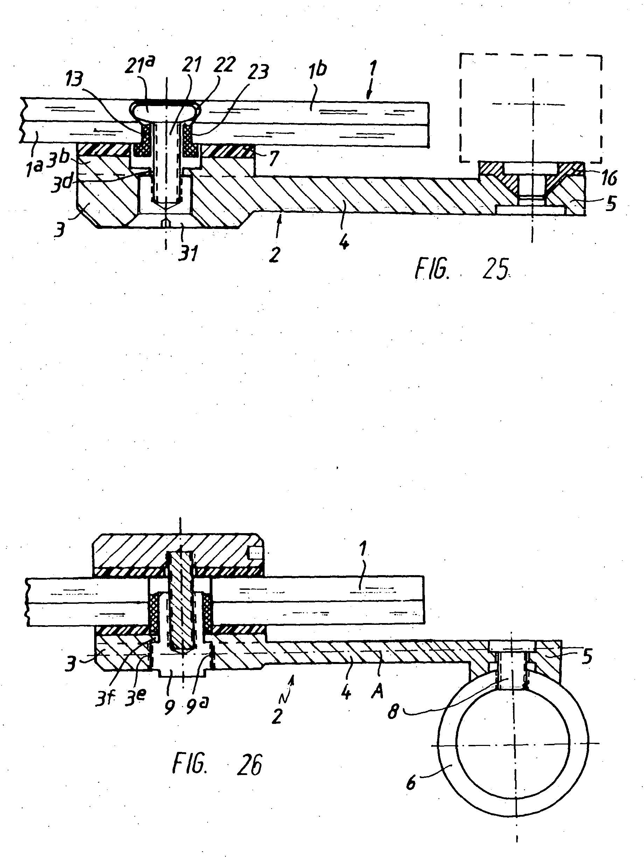

Figur 25 eine 18. Ausführungsform der Vorrichtung zur Halterung der Glasplatte an einem Vierkantpfosten, wobei der Halter mittels Hinterschnittanker an der Glasplatte befestigt ist;
Figur 26 eine 19. Ausführungsform der Vorrichtung zur Halterung der Glasplatte an einem Rundrohrpfosten.

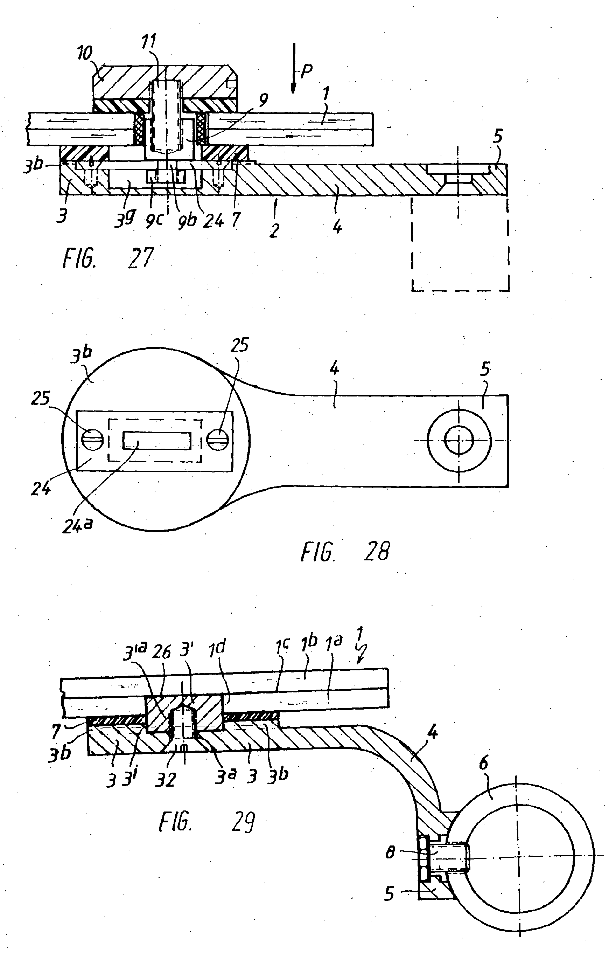

Figur 27 eine 20. Ausführungsform der Vorrichtung zur Halterung einer Glasplatte an einem Vierkantpfosten, wobei die Glasplatte zum Ausgleich von Fertigungstoleranzen an dem Halter in einer Richtung beweglich ist;
Figur 28 eine Aufsicht des in Figur 27 gezeigten Halters in Richtung des Pfeils P;
Figur 29 eine 21. Ausführungsform der erfindungsgemäßen Vorrichtung zur Halterung der Glasplatte an einem Rundrohrpfosten;

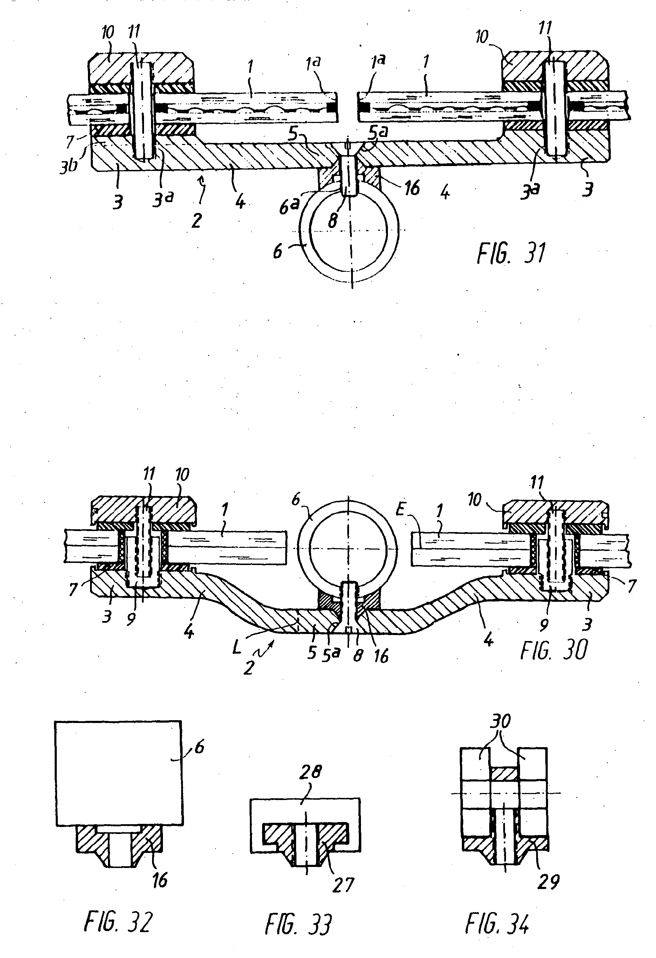

Figur 30 eine 22. Ausführungsform der Vorrichtung mit zweiarmigem Halter zur Halterung von zwei Platten an einem vorgesetzten Rundrohrpfosten;
Figur 31 eine 23. Ausführungsform der Vorrichtung mit zweiarmigem Halter zur Anbringung von zwei Platten an einem in der Plattenebene angeordnetem Pfosten;
Figur 32 den Querschnitt eines Adapters an einem Vierkantrohr;
Figur 33 den Querschnitt eines Adapters für eine T-Nutschiene;

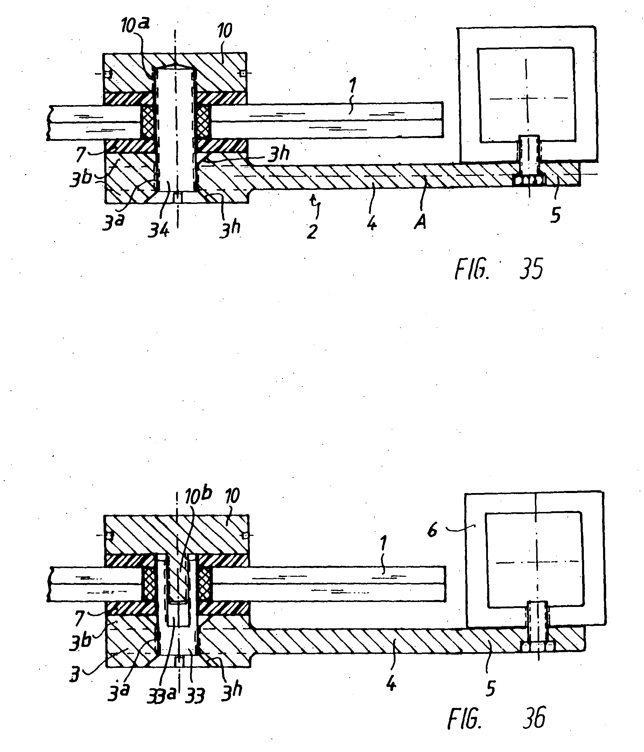

Figur 34 den Querschnitt eines Adapters für einen Systempfosten;
Figur 35 einen Halter mit Senkkopfschraube;
Figur 36 einen Halter mit Montageteil mit Senkkopfhülsenmutter;

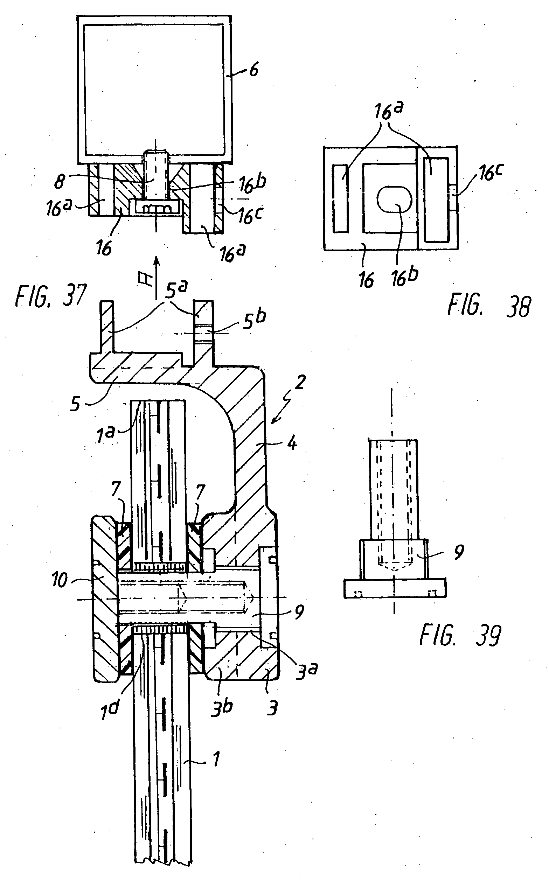

Figur 37 eine 24. Ausführungsform des an einer Solarmodulplatte montierten Halters mit einem an ein Vierkantrohr angeschraubten Adapter im Schnitt;
Figur 38 die Ansicht des Adapters in Richtung des Pfeils A;
Figur 39 die Seitenansicht der Hülsenmutter des in Figur 37 dargestellten Halters;

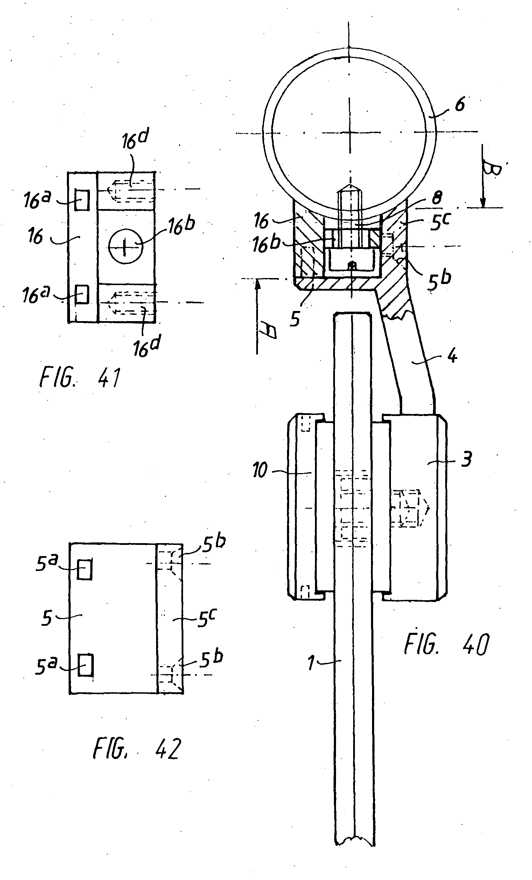

Figur 40 eine 25. Ausführungsform des an einer Verbundsicherheitsglasplatte montierten Halters mit dem an einem Rundrohrpfosten angeschraubten Adapter, teilweise im Schnitt;
Figur 41 die Ansicht des Adapters in Richtung des Pfeils A der Figur 40;

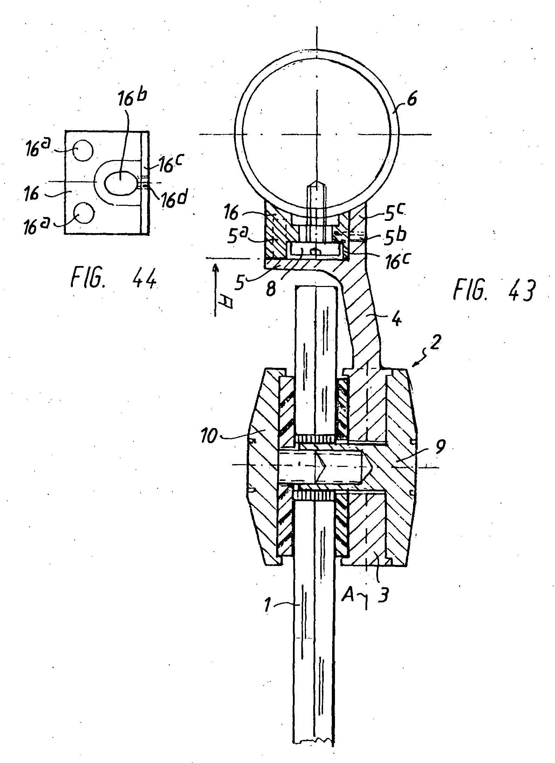

Figur 42 die Ansicht des Halters in Richtung des Pfeils B der Figur 40 ohne den Adapter;
Figur 43 eine 26. Ausführungsform des an eine Verbundsicherheitsglasplatte montierten und an einem Rundrohrpfosten angebrachten Halters im Schnitt;
Figur 44 die Ansicht des Adapters in Richtung des Pfeils A der Figur 43:

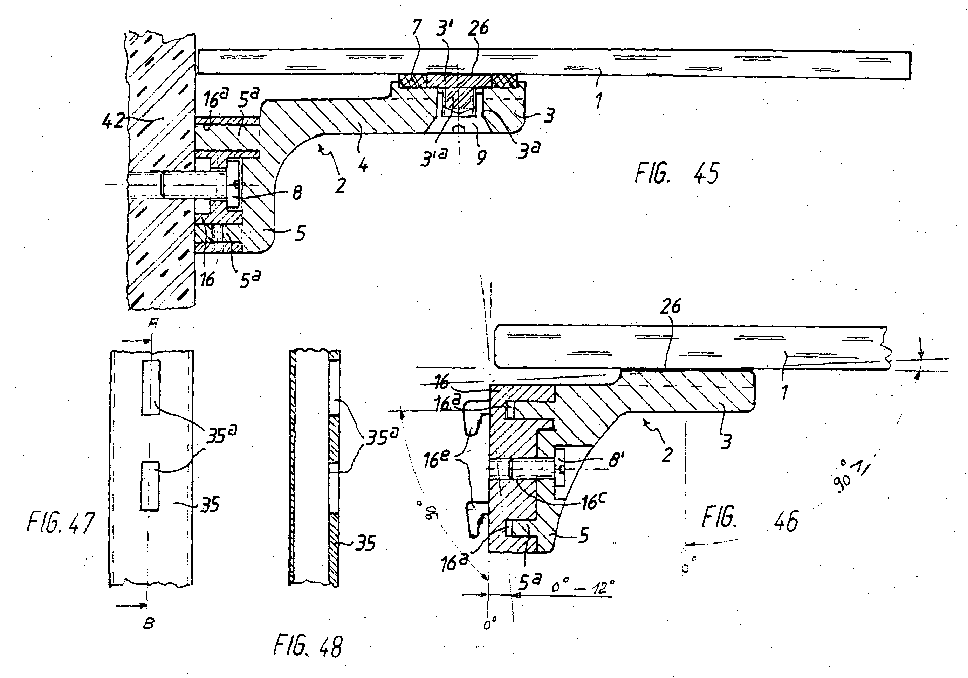

Figur 45 eine 27. Ausführungsform des an einer Wand angebrachten Halters, auf dem ein Glasboden montiert ist:
Figur 46 eine 28. Ausführungsform des Halters zur Anbringung an einer geschlitzten Schiene mit durch Klebung befestigter Glasplatte im Schnitt;
Figur 47 eine Teildarstellung einer geschlitzten Schiene als Tragelement für den in Figur 46 gezeigten Halter in der Aufsicht;

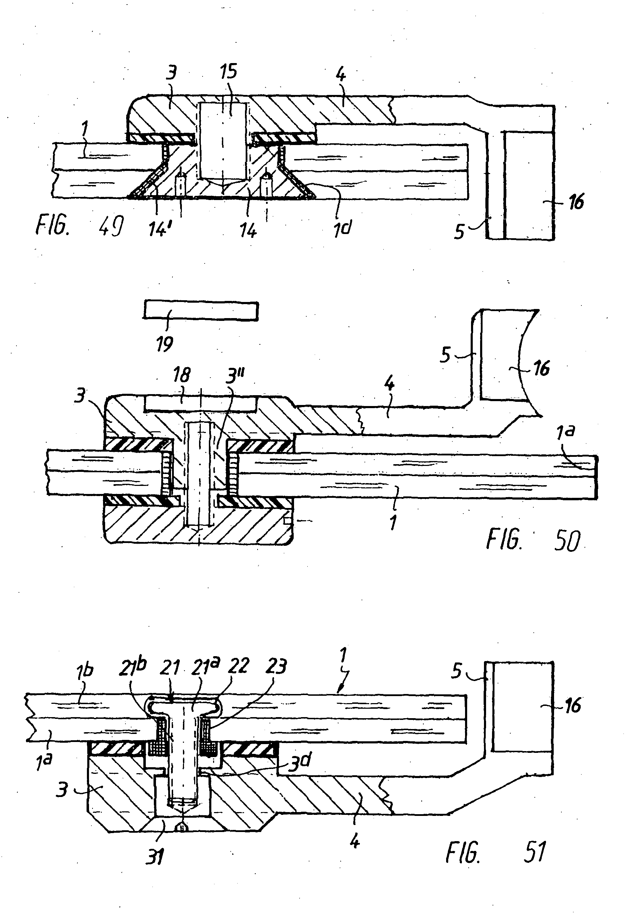

Figur 48 einen Schnitt nach der Linie A-B der Figur 47;
Figur 49 eine 29. Ausführungsform des erfindungsgemäßen Halters mit Glasplatte, teilweise im Schnitt;
Figur 50 eine 30. Ausführungsform des Halters, teilweise im Schnitt;
Figur 51 eine 31. Ausführungsform des Halters, teilweise im Schnitt, wobei der Halter mittels Hinterschnittanker an der Verbundsicherheitsglasplatte montiert ist;

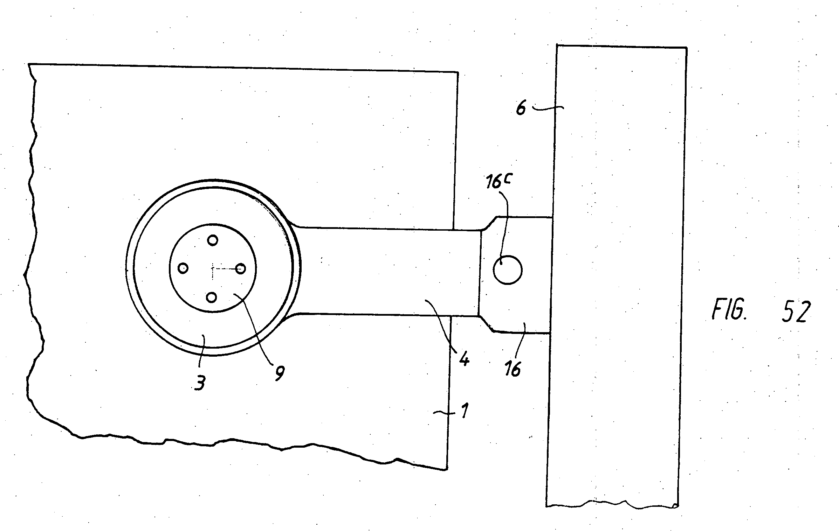

Figur 52 die Seitenansicht des in Figur 37 gezeigten Halters im zusammengesetzten Zustand;
Figur 53 eine 32. Ausführungsform des an einer Verbundsicherheitsglasplatte montierten Halters im Schnitt, der an einer Rolle angebracht ist;

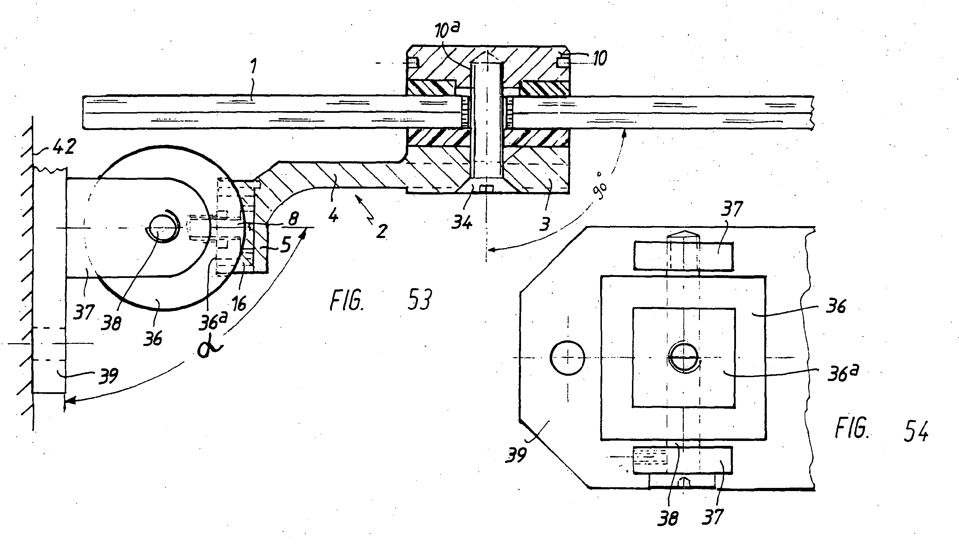

Figur 54 die Vorderansicht des in Figur 53 gezeigten Rollenwandhalters;

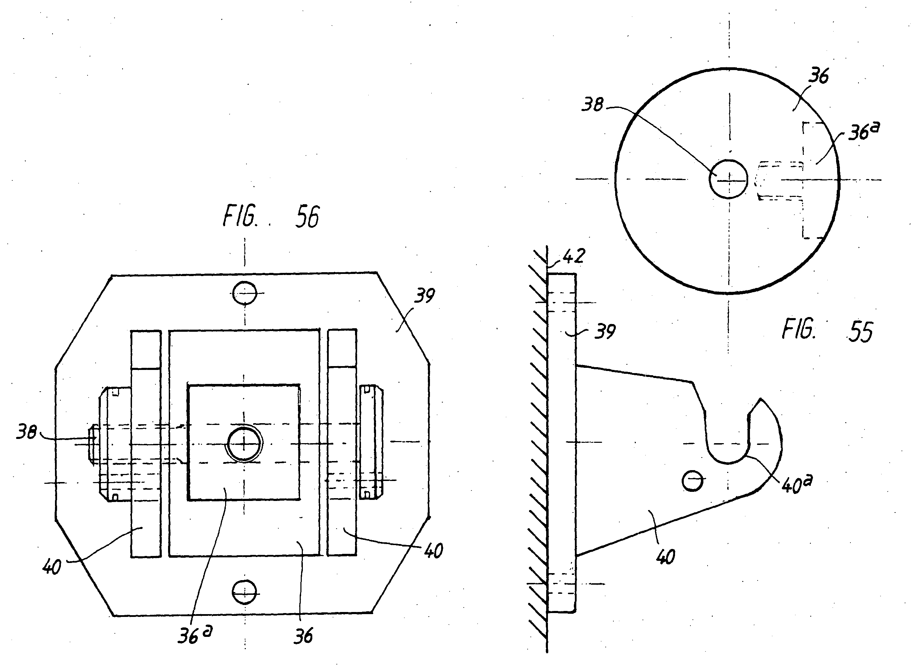

Figur 55 die Seitenansicht eines anderen Rollenwandhalters mit einer getrennt davon dargestellten Rolle für die Anbringung des in Figur 53 dargestellten Halters;

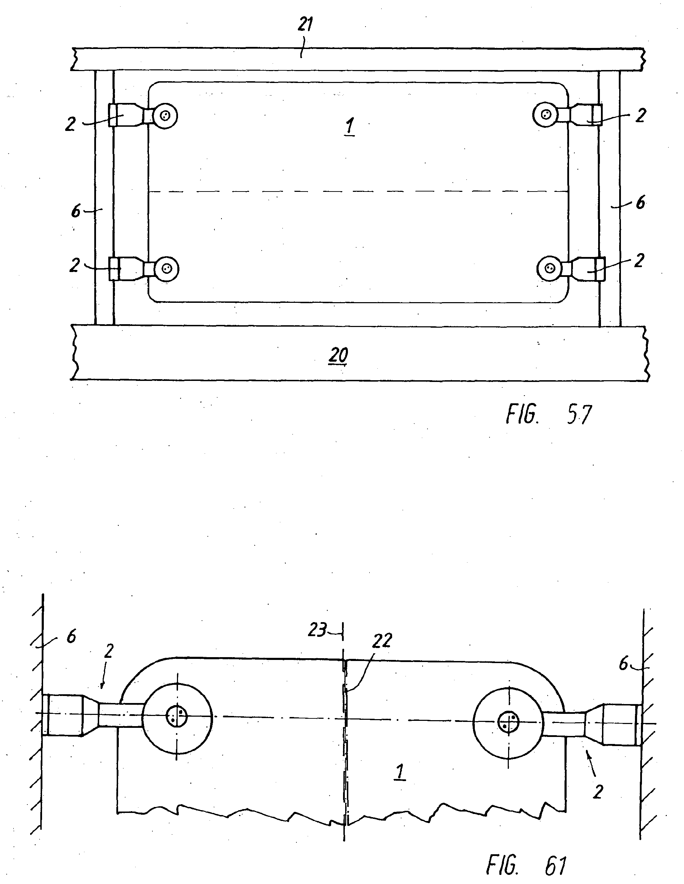

Figur 56 die Vorderansicht des in Figur 55 gezeigten Rollenwandhalters mit eingesetzter Rolle;
Figur 57 die Ansicht einer durch vier erfindungsgemäße Halter zwischen zwei Pfosten gehaltenen Glasplatte;

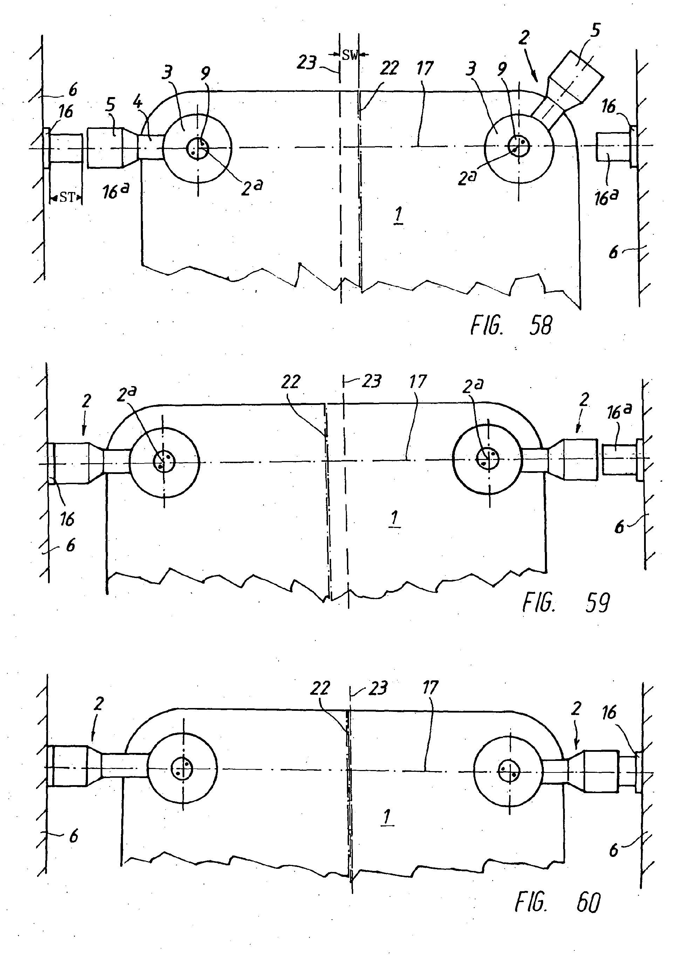

Figuren 58 bis 61 Darstellungen von vier aufeinander folgenden Schritten der Montage einer Platte zwischen zwei vertikalen Pfosten mit Haltern nach dem Schiebe-Stecksystem der Erfindung;

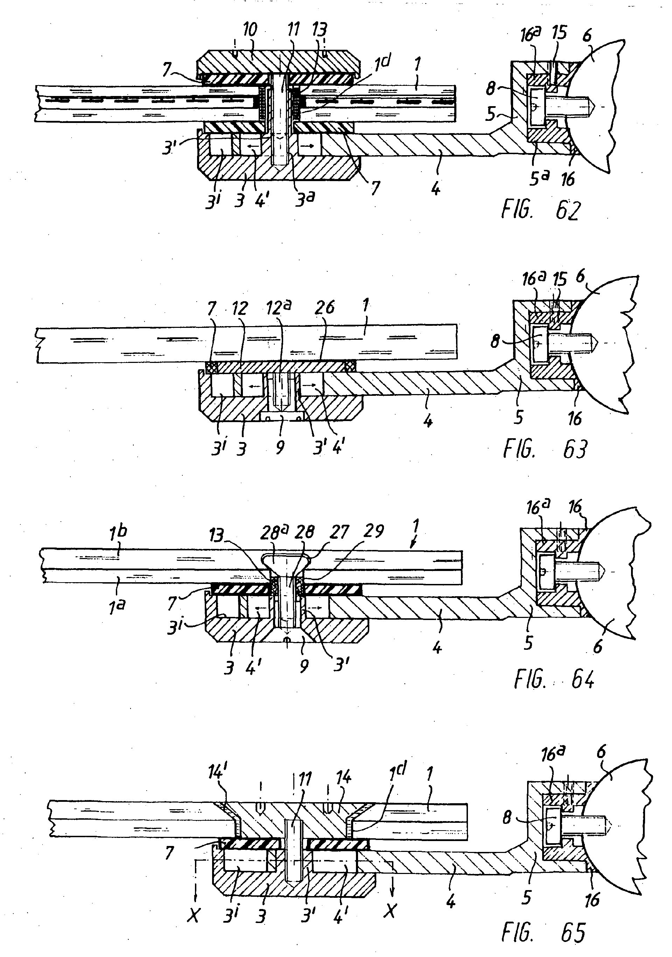

Figur 62 eine 33. Ausführungsform des erfindungsgemäßen Halters im Schnitt, wobei das zugehörige Tragelement nur teilweise Schematisch dargestellt ist;
Figur 63 eine 34. Ausführungsform des Halters ähnlich wie in Figur 62, jedoch mit geänderter Anbringung an der Platte;
Figur 64 eine 35. Ausführungsform ähnlich der in Figur 62, jedoch bei geänderter Montage an der Platte;
Figur 65 eine 36. Ausführungsform des Halters ähnlich wie in Figur 62, jedoch mit geänderter Anbringung an der Platte;

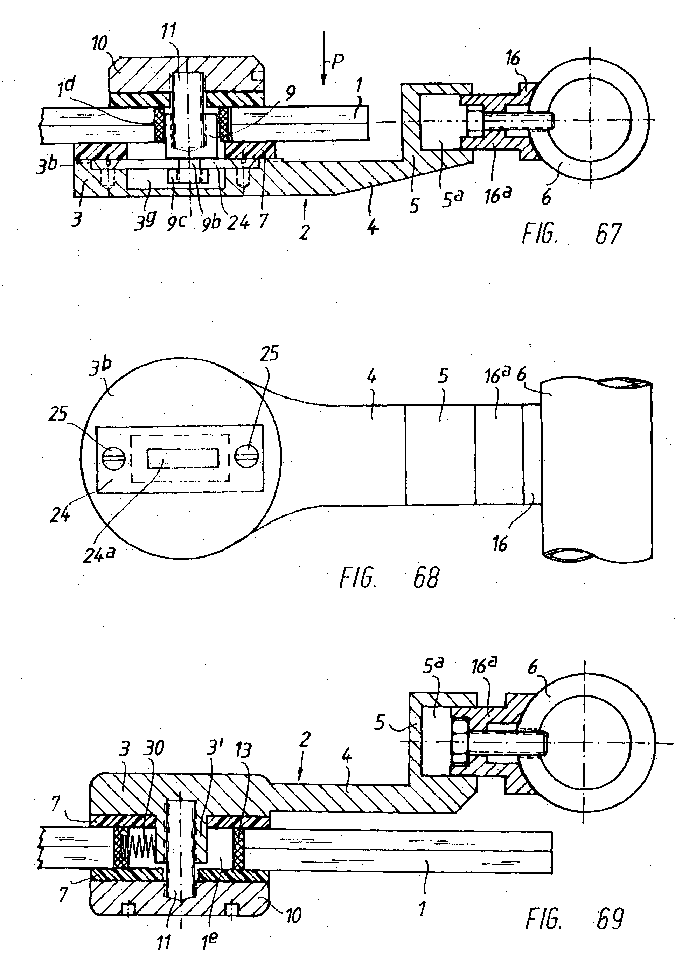

Figur 66 einen Schnitt nach der Linie X-X der Figur 65;
Figur 67 eine 37. Ausführungsform der Vorrichtung zur Halterung einer Platte;
Figur 68 eine Aufsicht des in Figur 67 gezeigten Halters ohne Glasplatte und Gegenteller in Richtung des Pfeils P;
Figur 69 eine 38. Ausführungsform der erfindungsgemäßen Halterungsvorrichtung für vorgesetzte Plattenmontäge;

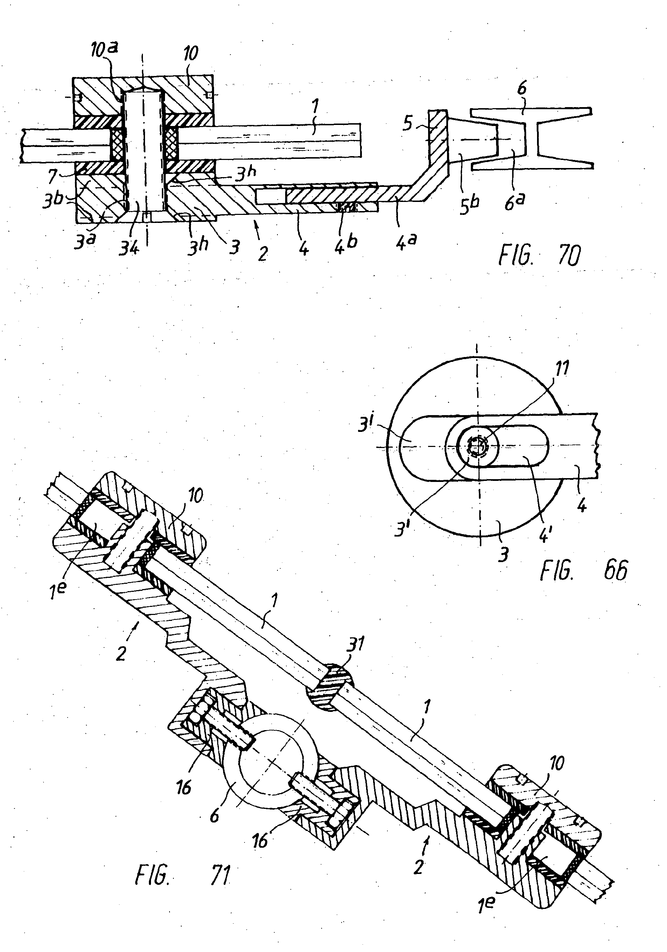

Figur 70 eine 39. Ausführungsform der erfindungsgemäßen Halterungsvorrichtung;

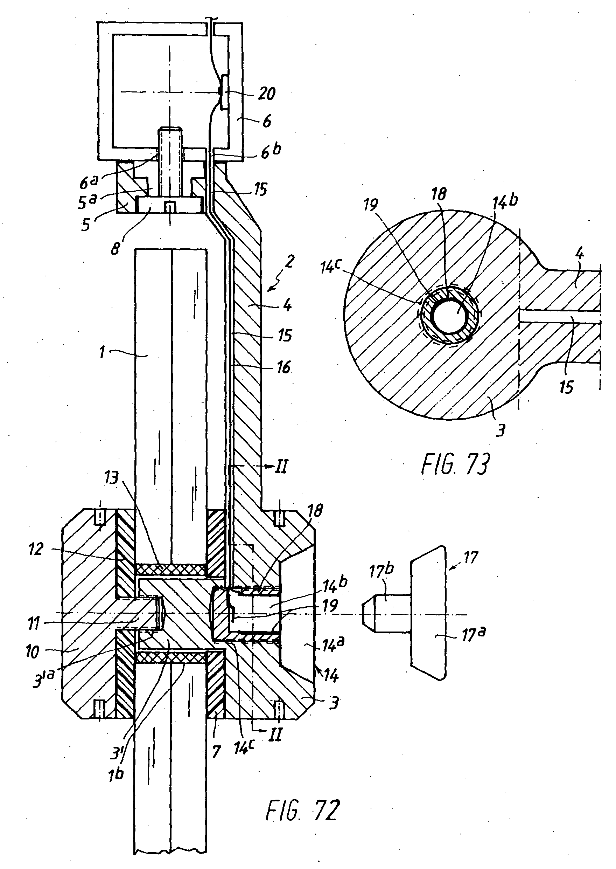

Figur 71 ein Tragelement mit zwei montierten Haltern ähnlich dem der Figur 69 für zwei Glasplatten, die Teil einer Dachfläche sind.
Figur 72 den Längsschnitt einer 40. Ausführungsform der erfindungsgemäßen Halterungsvorrichtung;
Figur 73 einen Schnitt nach der Linie II-II der Figur 72;

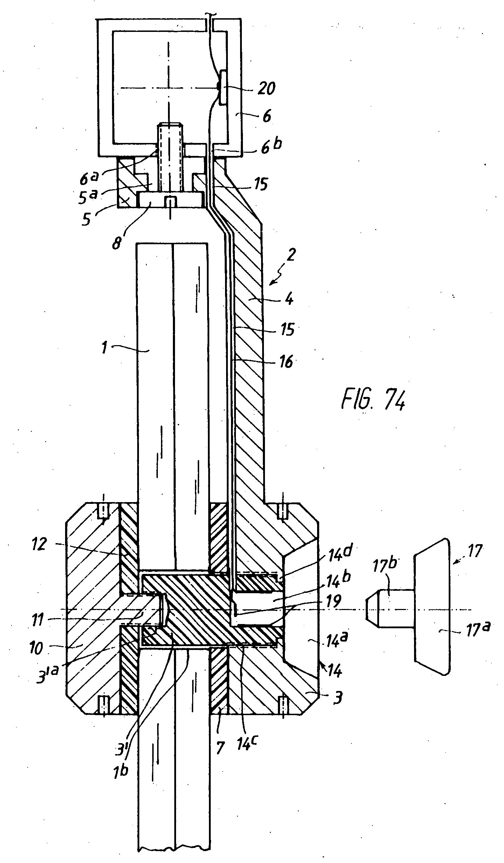

Figur 74 den Längsschnitt einer 41. Ausführungsform der erfindungsgemäßen Halterungsvorrichtung;

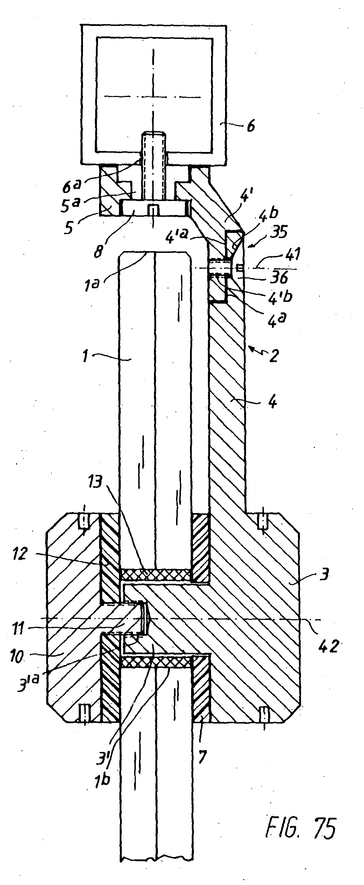

Figur 75 den Längsschnitt einer 42. Ausführungsform der an einem Pfosten angeschraubten Halterungsvorrichtung mit montierter Verbundsicherheitsglasplatte;

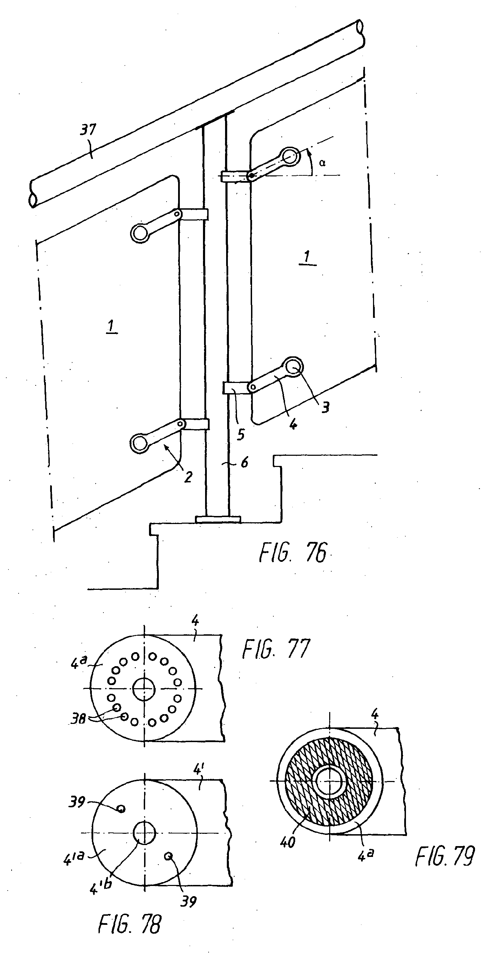

Figur 76 die Seitenansicht eines Teils eines Treppengeländers mit parallelogrammförmigen Glasplatten unter Benutzung der erfindungsgemäßen Halterungsvorrichtungen;
Figur 77 die Aufsicht auf die Gelenkfläche des zweiten Armteils bei der 42. Ausführungsform des Halters;
Figur 78 die Aufsicht auf die Gelenkfläche des ersten Armteils bei der 42. Ausführungsform des Halters; und
Figur 79 die Aufsicht auf die Gelenkflächen der Armteile bei einer weiteren Ausführungsform des Gelenks der erfindungsgemäßen Halterungsvorrichtung.

Nach Figur 1 besteht die Vorrichtung zur Halterung der Glasplatte 1 im wesentlichen aus einem Halter 2 zur Anschraubung an einem Pfosten 6. Der Halter umfaßt einen Montageteil 3 mit flachem Teller 3^{b},7 und axialer Gewindebohrung 3^{a}. Der Teller 3^{b} greift mit Zwischenlage einer ringförmigen Elastomerscheibe 7 an der Platte 1 an. An dem Montageteil ist etwa radial zu seiner Achse 3^{c} ein Arm 4 angeformt, der sich über den Plattenrand 1^{a} hinaus erstreckt und am Ende einen Anschraubteil 5 trägt, der gegenüber dem Arm 4 rechtwinklig zur Platte 1 hin abgewinkelt ist. Der Anschraubteil 5 hat eine Bohrung 5^{a}, deren Achse etwa in der Mittelebene der Platte 1 liegt. Eine Schraube 8 ist auf dem Anschraubteil 5 abgestützt und in eine Gewindebohrung 6^{a} des Pfostens 6 eingeschraubt. Zur Montage des Halters 2 an der Platte 1 ist in die Gewindebohrung 3^{a} des Montageteils eine Gewindehülse 9 (hier mit Sackbohrung) eingeschraubt. Ein Teller 10 hat ebenfalls eine axiale Gewindebohrung 10^{a}, in die ein Gewindestift 11 eingeschraubt ist. Der Teller 10 mit dem Gewindestift 11 ist von der anderen Seite der Platte 1 in die Gewindebohrung der Hülse 9 eingeschraubt, wobei zwischen dem Teller 10 und der Platte 1 ebenfalls eine ringförmige Elastomerscheibe 12 eingelegt ist. Auf diese Weise ist die Platte 1 an dem Halter 2 fest, aber lösbar angebracht. Zwischen der metallischen Gewindehülse 9 und der Wand der Glasbohrung 1^{d} liegt eine Glasschutzhülse 13 aus Hartkunststoff.Die Glasplatte 1 in Figur 1 ist als Verbundsicherheitsglasplatte dargestellt. Es kann jedoch auch eine andere Platte, z.B. eine Einscheibensicherheitsglasplatte, eine Solarplatte oder eine andere Schichtstoffplatte sein. Der Randabstand R der Glasplattenbohrung 1^{d} von dem Plattenrand 1^{a} beträgt etwa 100 mm. Der Durchmesser X der Teller 3^{b},7; 10 beträgt etwa 60 mm und liegt im allgemeinen in dem Bereich von 45 bis 80 mm. Bei quadratischen Tellern liegt die diagonale Dimension des Tellers ebenfalls in diesem Bereich.

Die Halterungsvorrichtung nach Figur 2 unterscheidet sich dadurch von der Ausführung nach Figur 1, daß der Montageteil 3 anstelle der Gewindehülse 9 einen axialen Gewindestift 15 trägt, auf den eine Senkkopfhutmutter 14 aufgeschraubt ist, die unter Zwischenlage eines Glasschutzrings 14' aus Kunststoff oder Aluminium gänzlich in der Glasbohrung 1^{d} liegt. Der Anschraubteil 5 hat ebenso wie bei der Ausführung nach Figur 1 auch eine ringförmige Aussparung 5^{b} für den Anschluß eines Adapters oder wenn der Pfosten 6 die Gewindebohrung 6^{a} als vorstehende Einnietmutter (nicht dargestellt) enthält. Eine Gewindebohrung 5^{c} in dem Anschraubteil 5 dient zur Aufnahme eines Gewindestifts (nicht gezeigt) zwecks Arretierung bzw. Verdrehsicherung an dem Pfosten 6.

Die Ausführungsform nach Figur 3 unterscheidet sich von der nach Figur 1 im wesentlichen dadurch, daß der Montageteil 3 anstelle der eingeschraubten Gewindehülse 9 eine angeformte Gewindehülse 3' von gleicher Funktion hat. Es gilt daher im übrigen das zu Figur 1 gesagte. Die Anschraubung an dem Rohrpfosten 6 erfolgt unter Zwischenlage eines Adapters 16. Durch die Zwischenlage eines Adapters ist eine Anpassung an unterschiedliche Pfostendurchmesser und -querschnittsformen möglich. Der Adapter 16 enthält analog zu der Bohrung 5^{c} ebenfalls eine Bohrung 16^{a} zwecks Arretierung mit Hilfe eines Gewindestiftes.

Bei der Ausführung nach Figur 4 ist zur Anpassung an einen Vierkantrohrpfosten ein Adapter 17 vorgesehen. Dabei ist der in die Bohrung 5^{a} eingreifende Teil des Adapters zylindrisch, während der dem Pfosten 6 anliegende Teil rechteckig ist.

Die in Figur 5 gezeigte Ausführungsform der erfindungsgemäßen Vorrichtung weicht von der Ausführungsform nach Figur 3 dadurch ab, daß der Arm 4 des Halters kürzer ist und der Anschraubteil 5 die Plattenkante 1^{a} nicht überragt und zudem von der Platte 1 abgewinkelt ist. Diese Ausführungsförm des Halters 2 kommt daher bei der vorgesetzten Montage zur Anwendung, d.h. wenn die Platten 1 nicht zwischen den Pfosten 6, sondern vor ihnen angeordnet werden sollen. Der Montageteil 3 enthält eine Aussparung 18, in die ein plattenartiger Körper 19 eingesetzt werden kann, der beispielsweise als Zierelement dient. Auch auf der Außenseite des Tellers 10 kann eine solche Aussparung mit eingesetztem Plattenkörper vorgesehen sein. Eine Abdeckplatte 20 dient zum Verschluß der Bohrung 5^{a} des Anschraubteils 5.

Bei der in Figur 6 gezeigten Ausführungsform ist der Montageteil 3 durch einen Hinterschnittanker 21 mit der Verbundsicherheitsglasplatte 1 verbunden. Hierzu hat die vordere Scheibe 1^{b} eine hinterschnittene Aussparung 22, an die sich in der Scheibe 1^{a} eine zylindrische Bohrung 23 anschließt. Der Anker 21 liegt mit seinem Kopf 21^{a} in der Aussparung 22 und ist gegen Herausziehen verspannt. Sein Bolzen durchstößt die zylindrische Bohrung 23 und eine axiale Durchbrechung 3^{d} des Montageteils 3 und ist mit einer in eine Senkbohrung des Montageteils 3 eingesetzte Hülsenmutter 31 verschraubt, wodurch die Platte 1 an dem Halter 2 fest, aber lösbar angebracht ist. An den Arm 4 ist wiederum der Anschraubteil 5 angeformt, der mit einem Adapter 16 für Vierkantrohrpfosten zusammenwirkt.

Die in Figur 7 gezeigte Ausführungsform unterscheidet sich von der nach Figur 1 dadurch, daß der Montageteil 3 anstelle der Sackbohrung 3^{a} eine Durchgangsbohrung 3^{e} mit einem Innenbund 3^{f} an der Außenseite hat. Die Gewindehülse 9 hat einen dementsprechend ausgestellten Gewindeteil 9^{a}, der in die Durchgangsbohrung 3^{e} bis zum Anschlag an den Innenbund 3^{f} eingeschraubt werden kann, wie in Figur 7 gezeigt ist. Diese Ausführung erlaubt es, den Halter 2 in einer um 180° um die Achse A des Arms 4 gedrehten Lage mit Hilfe derselben Gewindehülse 9 an der Platte zu montieren, wie in Figur 8 gezeigt ist. Mit den gleichen Haltern können daher die Platten 1 entweder zwischen den Pfosten wie in Figur 7 oder vor der Pfosten wie in Figur 8 montiert werden.

Die in den Figuren 9 und 10 gezeigte Ausführung unterscheidet sich von der nach Figur 1 im wesentlichen dadurch, daß in dem Montageteil 3 eine Nut 3^{g} enthalten ist, die in Richtung des Arms 4 verläuft. Eine Abdeckplatte 24 mit Längsschlitz 24^{a} deckt die Nut 3^{g} ab und ist durch Schrauben 25 auf dem Montageteil 3 befestigt. Die Gewindehülse 9 hat unterseitig einen Gewindezapfen 9^{b} mit einem Nutenstein 9^{c}, der in der T-Nut verschieblich ist. Auf diese Weise ist die Platte 1 an dem Halter 2 in Grenzen verschieblich montiert.

Bei der Ausführungsform nach Figur 11 ist ein Montageteil 3' an seiner Stirnfläche mittels Klebefuge 26 mit der innenseitigen Fläche der Scheibe 1^{b} der Platte 1 verklebt. Der Montageteil 3' hat eine axiale Gewindebohrung 3'^{a}, und der Montageteil 3 hat eine axiale Senkbohrung 3^{a}, während der Teller 3^{b} eine axiale Aussparung 3ⁱ für die teilweise Aufnahme des Montageteils 3' hat. Das mit der Scheibe 1^{b} verklebte Montageteil 3' ist mittels Senkkopfschraube 32 mit dem Montageteil 3 verschraubt, wobei zwischen dem Teller 3^{b} und der Außenfläche der Scheibe 1^{a} eine elastomere Ringscheibe 7 angeordnet ist.

Figur 12 zeigt eine weitere Ausführungsform mit einem zweiarmigen Halter. Das den Anschraubteil 5 bildende Mittelteil ist abgekröpft, so daß beim Anschrauben an den Pfosten 6 die Achse des Pfostens etwa in der Mittelebene E der gehaltenen Platte 1 liegt. Während Figur 12 einen zweiarmigen Halter für zwei Platten 1 zeigt, erhält man den zugehörigen einarmigen Halter durch Abschneiden längs der gestrichelte Linie L. Es ist ersichtlich, daß der gezeigte doppelarmige Halter 2 wegen der symmetrischen Bohrung 5^{a} nach Umsetzen des Adapters 16 nach außen auch für die vorgesetzte Montage benutzt werden kann.

Figur 13 zeigt wie Figur 12 den zweiarmigen Halter, jedoch ohne eingeschraubte oder angeformte Gewindehülsen 9 bzw. 3'. Der Adapter 16 ist nach außen umgesetzt, so daß die Platten 1 vor dem Pfosten 6 montiert sind. Aus dieser Figur ist ersichtlich, daß bei dieser Ausgestaltung der Halterungsvorrichtung die Plattenkanten 1^{a} beliebig weit genähert werden können. Die Platten 1 sind als Solarplatten dargestellt. Die Platte kann z.B. photovoltaische oder thermophotovoltaische Solarmodule enthalten. Anstelle der dargestellten Montage kann vorzugsweise auch eine Klebemontage, z.B. ausschließlich mit einer Klebeschicht 25 an der Außenseite der Platten zur Anwendung kommen, so daß eine maximale Plattenfläche dem Strahlungseinfall ausgesetzt wird.

Figur 14 zeigt den Querschnitt eines Adapters 16 für einen Vierkantpfosten. Figur 15 stellt den Querschnitt eines Adapters 27 für eine T-Nutschiene 28 dar, an der z.B. eine Solarplatte befestigt werden kann. Figur 16 zeigt einen Einsteckadapter 29 im Querschnitt, der in einen aus zwei Flacheisen bestehenden Systempfosten 30 eingesetzt ist.

Figur 17 zeigt schließlich einen Doppelarmhalter ähnlich wie Figur 12, bei dem jedoch der Anschraubteil 5 mit den beiden Armen 4 einen Winkel von 135° bildet, so daß die Platten 1 unter einem rechten Winkel eine Ecke bilden. Die eingeschraubten Gewindehülsen 9 können mehr oder weniger tief in die Montageteile 3 eingeschraubt werden, so daß eine Anpassung an unterschiedliche Dicken der Platten 1 möglich ist. Bei den Ausführungen nach den Figuren 12 und 17 sind die an den Platten 1 angreifenden Teller nur durch Elastomerscheiben 7 gebildet, bei der Ausführung nach Figur 11 durch den Montageteil 3' und den Teller 3^{b}.

Bei der Ausführungsform nach Figur 18 enthält der Montageteil 3 mit dem Teller 3^{b} eine axiale Gewindebohrung 3^{a} mit Senkungen 3^{h} auf beiden Seiten. Der Gegenteller 10 hat eine Gewindebohrung 10^{a}, in die eine Senkkopfschraube 34 eingeschraubt ist, die sich mit ihrem Kopf in der äußeren Senkung 3^{h} abstützt. Wie ersichtlich, kann der Halter 2 zur vorgesetzten Montage wie bei der Ausführungsform nach Figur 7 um 180° um die Achse A gedreht verschraubt werden. Die Ausführungsform nach Figur 19 unterscheidet sich von der nach Figur 18 dadurch, daß anstelle der Senkkopfschraube 34 eine Senkkopfhülsenmutter 33 in der Senkung 3^{h} abgestützt ist. Die Senkkopfhülsenmutter 33 enthält eine axiale Gewindebohrung 33^{a}. Der Teller 10 hat einen axial vorstehenden Gewindeteil 10^{b}, mit dem der Teller in die Gewindebohrung 33^{a} eingeschraubt ist. Die Hülsenmutter 33 wie auch die Schraube 34 sind in die Gewindebohrung 3^{a} eingeschraubt, so daß sie beim Aufsetzen der Platte 1 auf die Mutter 33 bzw. die Schraube 34 des bereits am Pfosten angeschraubten Halters 2 eine genügende Haltestabilität haben.

Nach Figur 20 besteht die Vorrichtung zur Halterung der Glasplatte 1 im wesentlichen aus einem Halter 2 zur Anschraubung an einem Pfosten 6. Der Halter umfaßt einen Montageteil 3 mit flachem Teller 3^{b},7 und axialer Gewindebohrung 3^{a}. Der Teller 3^{b} greift mit Zwischenlage einer ringförmigen Elastomerscheibe 7 an der Platte 1 an. An dem Montageteil ist etwa radial zu seiner Achse 3^{c} ein Arm 4 angeformt, der sich über den Plattenrand 1^{a} hinaus erstreckt und am Ende einen Anschraubteil 5 trägt. Der Anschraubteil 5 hat eine Bohrung 5^{a}, in die eine Schraube 8 eingesetzt ist. die Schraube 8 ist auf dem Anschraubteil 5 abgestützt und in eine Gewindebohrung 6^{a} des Pfostens 6 eingeschraubt. Zur Montage des Halters 2 an der Platte 1 ist in die Gewindebohrung 3^{a} des Montageteils eine Gewindehülse 9 (hier mit Sackbohrung) eingeschraubt. Ein Teller 10 hat ebenfalls eine axiale Gewindebohrung 10^{a}, in die ein Gewindestift 11 eingeschraubt ist. Der Teller 10 mit dem Gewindestift 11 ist von der anderen Seite der Platte 1 in die Gewindebohrung der Hülse 9 eingeschraubt, wobei zwischen dem Teller 10 und der Platte 1 ebenfalls eine ringförmige Elastomerscheibe 12 eingelegt ist. Auf diese Weise ist die Platte 1 an dem Halter 2 fest, aber lösbar angebracht. Zwischen der metallischen Gewindehülse 9 und der Wand der Glasbohrung 1^{d} liegt eine Glasschutzhülse 13 aus Hartkunststoff. Die Glasplatte 1 in Figur 20 ist als Verbundsicherheitsglasplatte dargestellt. Es kann jedoch auch eine andere Platte, z.B. eine Einscheibensicherheitsglasplatte, eine Solarplatte oder eine andere Schichtstoffplatte sein. Der Randabstand R der Glasplattenbohrung 1^{d} von dem Plattenrand 1^{a} beträgt etwa 100 mm. Der Durchmesser X der Teller 3^{b},7; 10 beträgt etwa 60 mm und liegt im allgemeinen in dem Bereich von 45 bis 80 mm. Bei quadratischen Tellern liegt die diagonale Dimension des Tellers ebenfalls in diesem Bereich.

Die Halterungsvorrichtung nach Figur 21 unterscheidet sich dadurch von der Ausführung nach Figur 20, daß der Montageteil 3 anstelle der Gewindehülse 9 einen axialen Gewindestift 15 trägt, auf den eine Senkkopfhutmutter 14 aufgeschraubt ist, die unter Zwischenlage eines Glasschutzrings 14' aus Kunststoff oder Aluminium gänzlich in der Glasbohrung 1^{d} liegt. Der Anschraubteil 5 hat ebenso wie bei der Ausführung nach Figur 20 auch eine ringförmige Aussparung 5^{b} für den Anschlüß eines Adapters oder wenn der Pfosten 6 die Gewindebohrung 6^{a} als vorstehende Einnietmutter (nicht dargestellt) enthält. Eine Gewindebohrung 5^{c} in dem Anschraubteil 5 dient zur Aufnahme eines Gewindestifts (nicht gezeigt) zwecks Arretierung bzw. Verdrehsicherung an dem Pfosten 6.

Die Ausführungsform nach Figur 22 unterscheidet sich von der nach Figur 20 im wesentlichen dadurch, daß der Montageteil 3 anstelle der eingeschraubten Gewindehülse 9 eine angeformte Gewindehülse 3' von gleicher Funktion hat. Es gilt daher im übrigen das zu Figur 20 Gesagte. Die Anschraubung an dem Rohrpfosten 6 erfolgt unter Zwischenlage eines Adapters 16. Durch die Zwischenlage eines Adapters ist eine Anpassung an unterschiedliche Pfostendurchmesser und -querschnittsformen möglich. Der Adapter 16 enthält analog zu der Bohrung 5^{c} ebenfalls eine Bohrung 16^{a} zwecks Arretierung mit Hilfe eines Gewindestiftes.

Bei der Ausführung nach Figur 23 ist zur Anpassung an einen Vierkantrohrpfosten ein Adapter 17 vorgesehen. Dabei ist der in die Bohrung 5^{a} eingreifende Teil des Adapters zylindrisch, während der dem Pfosten 6 anliegende Teil rechteckig ist.

Die in Figur 24 gezeigte Ausführungsform der erfindungsgemäßen Halterungsvorrichtung kommt bei der vorgesetzten Montage zur Anwendung, d.h. wenn die Platten 1 nicht zwischen den Pfosten-6, sondern vor ihnen angeordnet werden sollen. Der Montageteil 3 enthält eine Aussparung 18, in die ein plattenartiger Körper 19 eingesetzt werden kann, der beispielsweise als Zierelement dient. Auch auf der Außenseite des Tellers 10 kann eine solche Aussparung mit eingesetztem Plattenkörper vorgesehen sein. Eine Abdeckplatte 20 dient zum Verschluß der Bohrung 5^{a} des Anschraubteils 5.

Bei der in Figur 25 gezeigten Ausführungsform ist der Montageteil 3 durch einen Hinterschnittanker 21 mit der Verbundsicherheitsglasplatte 1 verbunden. Hierzu hat die vordere Scheibe 1^{b} eine hinterschnittene Aussparung 22, an die sich in der Scheibe 1^{a} eine zylindrische Bohrung 23 anschließt. Der Anker 21 liegt mit seinem Kopf 21^{a} in der Aussparung 22 und ist gegen Herausziehen verspannt. Sein Bolzen durchstößt die zylindrische Bohrung 23 und eine axiale Durchbrechung 3^{d} des Montageteils 3 und ist mit einer in eine Senkbohrung des Montageteils 3 eingesetzte Hülsenmutter 31 verschraubt, wodurch die Platte 1 an dem Halter 2 fest, aber lösbar angebracht ist. An den Arm 4 ist wiederum der Anschraubteil 5 angeformt, der mit einem Adapter 16 für Vierkantrohrpfosten zusammenwirkt.

Die in Figur 26 gezeigte Ausführungsform unterscheidet sich von der nach Figur 20 dadurch, daß der Montageteil 3 anstelle der Sackbohrung 3^{a} eine Durchgangsbohrung 3^{e} mit einem Innenbund 3^{f} an der Außenseite hat. Die Gewindehülse 9 hat einen dementsprechend ausgestellten Gewindeteil 9^{a}, der in die Durchgangsbohrung 3^{e} bis zum Anschlag an den Innenbund 3^{f} eingeschraubt werden kann, wie in Figur 26 gezeigt ist. Diese Ausführung erlaubt es, den Halter 2 in einer um 180° um die Achse A des Arms 4 gedrehten Lage mit Hilfe derselben Gewindehülse 9 an der Platte zu montieren. Mit den gleichen Haltern können daher die Platten 1 entweder zwischen den Pfosten oder vor den Pfosten wie in Figur 26 montiert werden.

Die in den Figuren 27 und 28 gezeigte Ausführung unterscheidet sich von der nach Figur 20 im wesentlichen dadurch, daß in dem Montageteil 3 eine Nut 3^{g} enthalten ist, die in Richtung des Arms 4 verläuft. Eine Abdeckplatte 24 mit Längsschlitz 24^{a} deckt die Nut 3^{g} ab und ist durch Schrauben 25 auf dem Montageteil 3 befestigt. Die Gewindehülse 9 hat unterseitig einen Gewindezapfen 9^{b} mit einem Nutenstein 9^{c}, der in der T-Nut verschieblich ist. Auf diese Weise ist die Platte 1 an dem Halter 2 in Grenzen verschieblich montiert.

Bei der Ausführungsform nach Figur 29 ist ein Montageteil 3' an seiner Stirnfläche mittels Klebefuge 26 mit der innenseitigen Fläche der Scheibe 1^{b} der Platte 1 verklebt. Der Montageteil 3' hat eine axiale Gewindebohrung 3'^{a}, und der Montageteil 3 hat eine axiale Senkbohrung 3^{a}, während der Teller 3^{b} eine axiale Aussparung 3ⁱ für die teilweise Aufnahme des Montageteils 3' hat. Das mit der Scheibe 1^{b} verklebte Montageteil 3' ist mittels Senkkopfschraube 32 mit dem Montageteil 3 verschraubt, wobei zwischen dem Teller 3^{b} und der Außenfläche der Scheibe 1^{a} eine elastomere Ringscheibe 7 angeordnet ist.

Figur 30 zeigt eine weitere Ausführungsform mit einem zweiarmigen Halter. Die Arme 4 sind S-förmig nach außen gebogen, so daß beim Anschrauben an den Pfosten 6 die Achse des Pfostens etwa in der Mittelebene E der gehaltenen Platte 1 liegt. Während Figur 30 einen zweiarmigen Halter für zwei Platten 1 zeigt, erhält man den zugehörigen einarmigen Halter durch Abschneiden längs der gestrichelten Linie L. Es ist ersichtlich, daß der gezeigte doppelarmige Halter 2 wegen der symmetrischen Bohrung 5^{a} nach Umsetzen des Adapters 16 nach außen auch für die vorgesetzte Montage benutzt werden kann.

Figur 31 zeigt wie Figur 30 den zweiarmigen Halter, jedoch ohne eingeschraubte oder angeformte Gewindehülsen 9 bzw. 3'. Der Adapter 16 ist nach außen umgesetzt, so daß die Platten 1 vor dem Pfosten 6 montiert sind. Aus dieser Figur ist ersichtlich, daß bei dieser Ausgestaltung der Halterungsvorrichtung die Plattenkanten 1^{a} beliebig weit genähert werden können. Die Platten 1 sind als Solarplatten dargestellt. Die Platte kann z.B. photovoltaische oder thermophotovoltaische Solarmodule enthalten. Anstelle der dargestellten Montage kann vorzugsweise auch eine Klebemontage, z.B. ausschließlich mit einer Klebeschicht 25 an der Außenseite der Platten zur Anwendung kommen, so daß eine maximale Plattenfläche dem Strahlungseinfall ausgesetzt wird.

Figur 32 zeigt den Querschnitt eines Adapters 16 für einen Vierkantpfosten. Figur 33 stellt den Querschnitt eines Adapters 27 für eine T-Nutschiene 28 dar, an der z.B. eine Solarplatte befestigt werden kann. Figur 34 zeigt einen Einsteckadapter 29 im Querschnitt, der in einen aus zwei Flacheisen bestehenden Systempfosten 30 eingesetzt ist.

Bei der Ausführungsform nach Figur 35 enthält der Montageteil 3 mit dem Teller 3^{b} eine axiale Gewindebohrung 3^{a} mit Senkungen 3^{h} auf beiden Seiten. Der Gegenteller 10 hat eine Gewindebohrung 10^{a}, in die eine Senkkopfschraube 34 eingeschraubt ist, die sich mit ihrem Kopf in der äußeren Senkung 3^{h} abstützt. Wie ersichtlich, kann der Halter 2 zur vorgesetzten Montage wie bei der Ausführungsform nach Figur 26 um 180° um die Achse A gedreht verschraubt werden. Die Ausführungsform nach Figur 36 unterscheidet sich von der nach Figur 35 dadurch, daß anstelle der Senkkopfschraube 34 eine Senkkopfhülsenmutter 33 in der Senkung 3^{h} abgestützt ist. Die Senkkopfhülsenmutter 33 enthält eine axiale Gewindebohrung 33^{a}. Der Teller 10 hat einen axial vorstehenden Gewindeteil 10^{b} , mit dem der Teller in die Gewindebohrung 33^{a} eingeschraubt ist. Die Hülsenmutter 33 wie auch die Schraube 34 sind in die Gewindebohrung 3^{a} eingeschraubt, so daß sie beim Aufsetzen der Platte 1 auf die Mutter 33 bzw. die Schraube 34 des bereits am Pfosten angeschraubten Halters 2 eine genügende Haltestabilität haben.

Nach den Figuren 37 bis 39 und 52 umfaßt der Halter 2 einen Montageteil 3 mit einem Teller 3^{b} und einer axialen Gewindebohrung 3^{a}. Der Teller 3^{b} greift mit Zwischenlage der ringförmigen Elastomerscheibe 7 an der Platte 1 an. Die Platte 1 hat eine Bohrung 1^{d}. Die Bohrungen 3^{a}, 1^{d} werden von der in Figur 39 dargestellten Hülsenmutter 9 durchstoßen. Eine Flachkopfschraube 10 ist von der anderen Seite der Platte 1 mit Zwischenlage eines Elastomerrings 7 in die Hülsenmutter 9 eingeschraubt, wodurch der Halter 2 an der Platte 1 montiert ist. An dem Montageteil 3 ist radial ein Arm 4 angeformt, der sich über den Plattenrand 1^{a} hinaus erstreckt und am Ende ein zur Seite der Platte 1 hin unter 90° abgewinkelten Anschlußteil 5 trägt. An dem plattenförmigen Anschlußteil 5 sind auf der dem Montageteil 3 abgewandten Seite zwei Stecker 5^{a} angeformt, von denen einer eine Querbohrung 5^{b} mit Gewinde enthält. Ein mit dem Halter 2 zusammenwirkender Adapter 16 hat den Steckern 5^{a} entsprechende Steckfässungen 16^{a} und eine Senkbohrung 16^{b}. Der Adapter 16 ist mittels Schraube 8 an den Vierkantrohrpfosten 6 angeschraubt. Die Stecker 5^{a} und die Steckfassungen 16^{a} haben den gleichen rechteckigen Querschnitt, wobei zu der einen Steckfassung 16^{a} eine Querbohrung 16^{c} führt. Durch Einschrauben eines Gewindestifts (nicht dargestellt) durch die Querbohrung 16^{c} in die Gewindebohrung 5^{b} kann die Steckverbindung zwischen dem Halter 2 und dem Adapter 16 gesichert werden.

In den Figuren ist die horizontale Steckrichtung gezeigt. Es sind jedoch auch andere Steckrichtungen möglich, z.B. die vertikale Steckrichtung, bei der der Stecker von oben in die vertikale Steckfassung eingesteckt wird. Die die Hülsenmutter 9 umgebende Buchse kann unterschiedliche Querschnitte haben, insbesondere ein Langloch aufweisen.

Bei der in den Figuren 40 bis 42 gezeigten Ausführungsform ist die Flachkopfschraube 10 anders als bei der Ausführung nach Figur 37 in eine Gewindebohrung des Montageteils 3 direkt eingeschraubt, wobei die Hülsenmutter 9 entfallen ist. Der plattenförmige Anschlußteil 5 trägt wiederum zwei rechteckige Steckzapfen 5^{a}. Ferner ist an das Anschlußteil 5 in Verlängerung des Arms 4 eine Anschlußwand 5^{c} angeformt, in der zwei Senkbohrungen 5^{b} enthalten sind. Der Anschlußwand 5^{c} liegt innenseitig der Adapter 16 an. Dieser hat zwei den Steckzapfen 5^{a} im Querschnitt entsprechende Steckfassungen 16^{a}, eine Durchgangsbohrung 16^{b} zum Anschrauben des Adapters mittels Schraube 8 an dem Rundrohrpfosten 6 sowie den Senkkopfbohrungen 5^{b} entsprechende Gewindebohrungen 16^{d}, so daß die Steckverbindung durch Senkkopfschrauben gesichert werden kann.

Bei der in den Figuren 43 und 44 gezeigten Ausführungsform ist der Montageteil 3 ähnlich dem der Ausführung nach Figur 37 ausgebildet, wobei nur der Kopf der Hülsenmutter 9 bis auf Tellergröße vergrößert ist . Der Montageteil ist zu seiner Mittelebene A symmetrisch, so daß die Platte 1 auf beiden Seiten montiert werden kann und der Halter 2 für die zwischengesetzte (wie dargestellt) und die vorgesetzte Montage geeignet ist. Die Steckverbindung zwischen Anschlußteil 5 und Adapter 16 ist ähnlich wie bei der in Figur40 gezeigten Ausführungsform, wobei jedoch in der Anschlußwand 5^{c} und in dem Adapter 16 nur eine Bohrung 5^{b} bzw 16^{d} zur Sicherung der Steckverbindung enthalten ist.

Bei der in Figur 45 gezeigten Ausführungsform enthält der Montageteil 3 des Halters eine Senkbohrung 3^{a}, in die die Hülsenmutter 9 eingesetzt ist. Auf die Glasplatte 1 ist mittels Klebeschicht 26 ein Montageteil 3' aufgeklebt, das rückseitig einen Gewindezapfen 3'^{a} hat. Nachdem die Klebeschicht 26 die nötige Festigkeit erlangt hat, wird der Montageteil 3 mit dem Montageteil 3' dadurch verbunden, daß die in die Bohrung 3^{a} eingesetzte Hülsenmutter 9 auf den Gewindezapfen 3'^{a} aufgeschraubt wird, bis der Elastomerring 7 zwischen der Platte 1 und dem Montageteil 3 eine ausreichende Kompression erfahren hat, um die Klebeschicht 26 gegen atmosphärische Einflüsse abzudichten. Die Steckverbindung zwischen dem Anschlußteil 5 und dem Adapter 16 entspricht der Ausführung nach Figur 37, wobei jedoch der Adapter 16 auf eine Wand 42 aufgeschraubt ist. Bezüglich weiterer Einzelheiten wird auf die Beschreibung zu Figur 37 bis 39 verwiesen.

Die in den Figuren 46 bis 48 gezeigte Ausführungsform des Halters dient ebenso wie die in Figur 45 gezeigte Ausführungsform zum Halten von Glasböden. Nach Figur 46 ist der Montageteil 3 mittels Klebeschicht 26 direkt mit der Glasplatte 1 verbunden. Die Steckverbindung zwischen dem Anschlußteil 5 und dem Adapter 16 ist ähnlich wie bei der Ausführungsform nach Figur 37 ausgebildet. Der Adapter 16 ist jedoch rückseitig mit Haken 16^{e} bestückt, durch die er in die Schlitze 35^{a} einer Schlitzschiene 35 eingehängt werden kann. Die Steckverbindung ist in diesem Falle durch eine Schraube 8' gesichert, die auf dem Anschlußteil 5 abgestützt und in die Adapterbohrung 16^{c} eingeschraubt ist. Der Halter 2 ist so ausgebildet, daß die Glasbodenplatte 1 nach Anbringung an der Schiene 35 im unbelasteten Zustand von der Schiene 35 weg um einen kleinen Winkel von z.B. 1° leicht ansteigt, so daß im belasteten Zustand kein Gefälle zur freien Plattenkante entsteht. Im übrigen muß bei geneigten Tragelementen auch die Rückwand des Adapters 16 entsprechend geneigt sein, damit der Glasboden 1 im belasteten Zustand diese etwa horizontale lage einnimmt.

Bei dem Halter nach Figur 49 trägt der Montageteil 3 einen axialen Gewindestift 15, auf den eine Senkkopfhutmutter 14 aufgeschraubt ist, die mit Zwischenlage eines Glasschutzrings 14' aus Kunststoff oder Aluminium gänzlich in der Glasbohrung 1^{d} versenkt ist. Der Anschlußteil 5 kann unterschiedlich ausgebildet sein und ist ebenso wie in den Figuren 50 und 51 nur schematisch dargestellt.

Die in Figur 50 gezeigte Ausführungsform des Halters weicht von der Ausführungsform nach Figur 49 im wesentlichen dadurch ab, daß der Arm 4 kürzer als der Abstand bis zum Plattenrand 1^{a} ist und der Anschlußteil 5 von der Platte 1 weg abgewinkelt ist. Diese Ausführungsform des Halters kommt daher bei der vorgesetzten Montage zur Anwendung, d.h. wenn die Platten 1 vor den Pfosten angeordnet werden sollen. Der Montageteil 3 hat anstelle der eingesetzten Hülsenmutter 9 (Fig. 37) eine angeformte Hülse 3" von gleicher Funktion. Die Montage der Platte 1 erfolgt sonst ebenso wie bei der Ausführungsform nach Figur 37. Der Montageteil 3 enthält ferner eine Aussparung 18, in die ein plattenartiger Körper 19 eingesetzt werden kann, der beispielsweise als Zierelement dient.

Bei der in Figur 51 gezeigten Ausführungsform ist die Verbundsicherheitsglasplatte 1 durch einen Hinterschnittanker 21 an dem Montageteil 3 angebracht. Hierzu hat die vordere Scheibe 1^{b} eine hinterschnittene Aussparung 22, an die sich in der Scheibe 1^{a} eine zylindrische Bohrung 23 anschließt. Der Anker 21 liegt mit seinem Kopf 21^{a} in der Aussparung 22 und ist gegen Herausziehen verspannt. Sein Gewindebolzen 21^{b} durchstößt die zylindrische Bohrung 23 und eine axiale Durchbrechung 3^{d} des Montageteils 3 und ist mit einer in einer Senkbohrung des Montageteils 3 eingesetzten Hülsenmutter 31 verschraubt, wodurch die Platte 1 an dem Halter fest aber lösbar angebracht ist.

Bei der Ausführungsform nach den Figuren 53 und 54 enthält der Montageteil 3 eine Senkbohrung und der Gegenteller 10 eine Gewindebohrung 10^{a}, in die eine Senkkopfschraube 34 eingeschraubt ist, wodurch die Platte 1 an dem Halter 2 lösbar montiert ist. Der Anschlußteil 5 ist ebenso ausgebildet wie bei der Ausführungsform nach Figur 37 und 38. Der Adapter 16 ist in eine Ausnehmung 36^{a} einer Rolle 36 eingesetzt und mittels Schraube 8 in der Ausnehmung befestigt. Die Rolle 36 ist zwischen zwei Laschen 37 auf einer Achse 38 drehbar, wobei die Laschen 37 an einer Wandplatte 39 befestigt sind, die ihrerseits z.B. an einer Wand 42 angebracht ist. Diese Ausführungsform kommt insbesondere bei der wandnahen Anbringung von Glasvordächern oder Solarplatten zur Anwendung, bei denen die Plattenneigung α veränderbar sein soll, z.B. wenn eine Solarplatte der maximalen Sonneneinstahlung stetig nachgeführt werden soll.

Bei der in denFiguren 55 und 56 gezeigten Ausführungsform ist die Rolle 36 mit dem in der Ausnehmung 36^{a} befestigten Halter (nicht dargestellt) zwischen zwei oben offenen Wandhaltern 40 gelagert, wobei die Rollenachse 38 in den Schalen 40^{a} gelagert ist. Durch diese Ausführungsform wird den Monteuren die Montage schwerer Glasplatten, wie z.B. Glasvordächern, erleichtert. Hierzu werden an der Platte wandnah Halter 2 mit den über Adapter 16 angebrachten Rollen 36 befestigt. Ferner werden wandfern Glaspunkthalter an der Platte montiert. Die Platte wird dann mit den Achsen 38 in die Lager 40^{a} der an der Wand 42 montierten Wandhalter 40 eingesetzt und nach dem Einschwenken in die gewünschte Neigung an den wandfernen Punkthalter der Platte mit zuvor an der Wand 42 befestigten Zug- und/oder Druckstäben (nicht dargestellt) verbunden.

Figur 57 zeigt einen Teil einer Balkonbrüstung mit zwei Pfosten 6, an denen mit Hilfe eines oberen Halterpaares 2 und eines unteren Halterpaares 2 eine Glasplatte 1 montiert ist. Die Pfosten 6 sind auf der Oberseite einer Bodenplatte 20 angebracht und tragen an ihren oberen Enden einen Handlauf 21.

Die Figuren 58 bis 61 zeigen den oberen Teil der Glasplatte 1 von Figur 1 in vergrößertem Maßstab. Der Abstand der Halter 2 ist in diesen Figuren dadurch verkürzt dargestellt, daß der mittlere Teil der Platte 1 herausgeschnitten ist und diese Schnittunterbrechung der Platte als doppelte strichpunktierte Mittellinie 22 der Platte dargestellt ist. Die Mittellinie zwischen den beiden Pfosten 6 ist durch die gestrichelte Linie 23 gekennzeichnet. Die Figuren 58 bis 61 dienen zur Erläuterung einer bevorzugten Ausführungsform der Schiebe-Steckmethode der Erfindung. Diese Ausführungsform des Systems, bei der der maximale Schiebeweg SW des Halters kleiner als die Stecktiefe ST ist, erfordert bei der Montage der Platte außer den Schiebebewegungen der Halter auch eine Verschiebung der Platte, wie nachfolgend erläutert wird. Bei einer anderen Ausführung des Systems ist der Schiebeweg SW gleich oder größer als die Stecktiefe ST. Alle diese Ausführungen des Schiebe-Stecksystems können mit den verschiedenen Ausführungsformen des Halters realisiert werden, die weiter unten näher beschrieben werden.

Der in den Darstellungen des Erfindungsprinzips in den Figuren 58 bis 61 benutzte Halter entspricht der in den Figuren 62 oder 63 gezeigten Ausführungsform, bei der der Arm 4 relativ zu dem Teller des zweiten Montageteils 3 verschiebbar ist. Zu weiteren Einzelheiten dieser Ausführungsform des Halters wird auf die Beschreibung zu den Figuren 63 und 64 verwiesen.

Die Figuren 58 bis 61 zeigen nur den oberen Teil der an die Pfosten 6 zu montierenden Platte 1 mit nur einem Halter 2 an jedem Pfosten. Auf die Darstellung des Plattenunterteils mit einem zweiten Halter 2 an jedem Pfosten wurde verzichtet, weil der untere Halter in gleicher Weise wie der dargestellte obere Halter bewegt wird. Nach Figur 58 ist die zu montierende Platte 1 zwischen den Pfosten 6 so platziert, daß die Schwenkachsen 2^{a} der Halter 2 die gemeinsame Steckachse 17 der Zapfen 16^{a} beider Adapter 16 schneiden. Dabei sind die Arme 4 mit den Montageteilen 5 weitestmöglich eingeschoben, so daß die Arme 4 in ihrer geringsmöglichen Länge in der Abbildung sichtbar sind. Der Arm 4 mit seinem ersten Montageteil 5 des linken Halters ist in die Steckachse 17 eingeschwenkt, während der rechte Halter 2 aus der Steckachse 17 herausgeschwenkt ist. Die Platte 1 ist um den Schiebeweg SW nach rechts verschoben, wie aus dem gegenseitigen Abstand der Mittellinie 22 der Platte 1 und der Mittellinie 23 zwischen den Pfosten 6 ersichtlich ist.

Nun wird gemäß Figur 59 die Platte 1 um den zweifachen Schiebeweg SW nach links verschoben, wobei die Steckfassung des ersten Montageteils 5 des linken Halters 2 vollständig auf den Steckzapfen 16^{a} des Adapters 16 an dem linken Pfosten auffährt. Anschließend wird der rechte Halter 2 in die Steckachse 17 geschwenkt, wie dargestellt, so daß auch die rechte Steckverbindung in Eingriff gebracht werden kann.

In dem in Figur 60 dargestellten nächsten Schritt wird an dem linken Halter der den Montageteil 5 tragende Arm 4 um den Schiebeweg SW ausgeschoben, wobei die Platte 1 zwangsläufig um den Schiebeweg SW nach rechts verschoben wird, so daß die beiden Mittellinien 22 und 23 etwa zusammenfallen. Dabei schiebt sich die Steckfassung des Montageteils 5 des rechten Halters 2 um den Schiebeweg SW (= der halben Stecktiefe ST) auf den Steckzapfen 16^{a}, wie in Figur 60 gezeigt ist.

Im letzten Schritt wird dann nach Figur 61 auch der Arm 4 des rechten Halters um den Schiebeweg SW ausgeschoben, wodurch die Steckverbindung am rechten Pfosten in der ganzen Stecktiefe in Eingriff kommt. In dieser Endstellung befindet sich die Platte 1 auch in der Mitte zwischen den Pfosten 6. Als letzter Schritt werden die Halter 2 in dieser Position arretiert, bei der dargestellten Ausführungsform durch Anziehen der Hülsenmuttern 9, so daß die Arme 4 in den Montagetellern 3 nicht mehr beweglich sind.

Zur Demontage der Platte laufen die geschilderten Arbeitsgänge rückwärts, d.h. in der Reihenfolge von Figur 61 bis Figur 58 ab. Diese Ausführungsform des Schiebe-Stecksystems bietet eine hohe Sicherheit gegen Demontage der Platte durch unberufene Personen. Zur Abnahme der Platte müssten nicht nur die Teller 3 gelöst und die Arme 4 eingeschoben werden, sondern die Platte 1 müsste dann noch zu dem einen Pfosten hin verschoben werden, womit der in Figur 59 gezeigte Stand erreicht würde, bei dem die Platte 1 immer noch einseitig am linken Pfosten gehalten würde. Erst nach dem Wegschwenken der rechten Halter gemäß Figur 58 könnten auch die Steckverbindungen am linken Pfosten getrennt werden.

Bei einer anderen Ausführungsform des erfindungsgemäßen Schiebe-Stecksystems ist der Schiebeweg SW des Halters gleich oder größer als die Stecktiefe der Steckverbindung. In diesem Falle ist die Montage wesentlich einfacher, da nach Platzierung der Platte in der Mitte zwischen den Pfosten 6 und Einschwenken der gänzlich eingeschobenen Halter in die Steckachse 17 (wie in Figur 58 links gezeigt) die Montageteile 5 aller Halter 2 ohne weiteres und gleichzeitig auf die Steckzapfen 16^{a} der Adapter 16 vollständig aufgeschoben werden können, worauf die Halter durch Anziehen der Hülsenmuttern 9 arretiert werden. Diese leichtere Montierbarkeit wird durch den längeren Schiebeweg SW im Halter erkauft:

Figur 62 zeigt eine Ausführungsform des Halters, bei dem der den ersten Montageteil 5 tragende Arm 4 relativ zu dem mit dem Gegenteller 10 verschraubten zweiten Montageteil 3 verschiebbar ist. Der den zweiten Montageteil 3 bildende Teller hat innenseitig eine zu dem Tragelement 6 hin offene Längsnut 3ⁱ, in welcher der Arm 4 verschiebbar geführt ist. Der Arm 4 hat nahe seinem freien Ende ein Langloch 4', und der tellerförmige Montageteil 3 hat innenseitig eine angeformte Gewindebuchse 3', die das Langloch 4' durchstößt und auch die Bohrung 1^{d} der Glasplatte 1 größtenteils durchragt und dort von einer Glasschutzbuchse 13 umgeben ist. Die Glasplatte ist in diesem Falle eine mit Solarmodulen bestückte Glasplatte. Zwischen dieser Platte und dem Montageteil 3 mit dem darin verschieblichen Arm 4 liegt eine elastomere Ringscheibe 7, die den direkten Kontakt zwischen den Metallteilen 3,4 und der Glasplatte 1 verhindert und bei ausreichender Klemmung auch den Arm 4 in der Nut 3ⁱ festklemmt. Ein Gegenteller 10 mit einem axialen Gewindezapfen 11 ist unter Zwischenlage einer zweiten elastomeren Ringscheibe 7 in die Gewindebuchse 3' eingeschraubt. Bei ausreichendem Anziehen des Gegentellers 10 reicht die Klemmung der Ringscheibe 7 aus, um den Arm 4 in der Nut 3ⁱ festzulegen. Der mittels Schraube 8 an einem Pfosten 6 angeschraubte Adapter 16 hat einen zapfenartigen Stecker 16^{a}, der mit der Steckfassung 5^{a} des ersten Montageteils vollständig in Eingriff ist. Durch weiteres Einschieben des Arms 4 in die Nut 3ⁱ und Zurückziehen der Platte 1 von dem Pfosten 6 kann die Steckverbindung 5^{a},16^{a} vollständig getrennt werden. Die Steckverbindung kann im Eingriff durch eine Schraube 15 (gestrichelt angedeutet) zusätzlich gesichert werden.

Bei der in Figur 63 gezeigten Ausführungsform ist an der Glasplatte 1 mittels Klebeschicht 26 ein plattenförmiges Bauteil 12 angebracht, das einen axialen Gewindezapfen 12^{a} trägt. Der tellerartige zweite Montageteil 3 des Halters hat ebenso wie bei der Ausführung nach Figur 62 eine Gewindebuchse 3' in der Nut 3ⁱ, in der der Arm 4 mit Langloch 4' geführt ist. Das Bauteil 12 ist von einem elastomeren Ring 7 umgeben, der zwischen der Platte 1 und dem Montageteil 3 mit Arm 4 komprimiert ist und die Klebeschicht abdichtet. Der Montageteil 3 hat eine axiale Senkbohrung, in die eine Hülsenmutter 9 eingesetzt und mit dem Gewindezapfen 12^{a} verschraubt ist. Hierbei kann der Arm 4 auch unter Mitwirkung des elastomeren Rings 7 in seiner Lage in der Nut 3ⁱ festgeklemmt werden. Der Adapter 16 unterscheidet sich bei dieser Ausführungsform und den Ausführungsformen der Figuren 64 und 65 nicht von dem Adapter in Figur 62.

Die in Figur 64 gezeigte Ausführungsform des Halters ähnelt weitgehend der Ausführungsform nach Figur 63. Die Verbundsicherheitsglasplatte 1 hat aber in der vorderen Scheibe 1^{b} eine hinterschnittene Aussparung 27, an die sich in der hinteren Scheibe 1^{a} eine zylindrische Bohrung 29 anschließt. Ein Hinterschnittanker 28 liegt mit seinem Kopf 28^{a} in der Aussparung 27 und ist gegen Herausziehen verspannt. Sein Bolzen durchstößt die zylindrische Bohrung 29 unter Zwischenlage einer Glasschutzbuchse 13 und ist in eine Senkkopfhülsenmutter 9 eingeschraubt. Zwischen dem Montageteil 3 und dem darin verschieblichen Arm 4 einerseits und der Scheibe 1^{a} liegt wiederum eine elastomere Ringscheibe 7, durch deren Kompression der Arm 4 in dem zweiten Montageteil 3 festgelegt werden kann.

Die in den Fig. 65 und 66 gezeigte Ausführung entspricht der in Fig. 62 dargestellten Ausführung, wobei jedoch der außen auf der Platte 1 aufliegende Gegenteller 10 durch einen Senkkopf 14 ersetzt ist, der unter Zwischenlage eines Glasschutzrings 14' aus Kunststoff oder Aluminium gänzlich in der Glasbohrung 1^{d} liegt. Der Gewindebolzen 11 des Senkkopfes ist in die Gewindebuchse 3' des zweiten Montageteils 3 soweit eingeschraubt, daß die elastomere Ringscheibe 7 wie bei den Ausführungsformen nach den Figuren 62 und 64 komprimiert wird, so daß der Arm 4 in der Nut 3ⁱ festgelegt wird.

Die Ausführungsform nach Figur 67 unterscheidet sich von der nach Figur 62 im wesentlichen dadurch, daß der Halter 2 einteilig ist und in dem zweiten Montageteil 3 eine Nut 3^{g} enthalten ist, die in Richtung des Arms 4 verläuft und beidendig begrenzt ist. Eine Abdeckplatte 24 mit Längsschlitz 24^{a} deckt die Nut 3^{g} unter Bildung eines T-förmigen Nutquerschnitts ab und ist durch Schrauben 25 (siehe Figur 68) auf dem Montageteil 3 befestigt. Anstelle der angeformten Gewindebuchse 3' ist eine Gewindebuchse 9 vorgesehen, die unterseitig einen Gewindezapfen 9^{b} mit einem Nutenstein 9^{c} hat, der in der T-Nut 3^{g} verschiebbar ist. Zwischen dem zweiten Montageteil 3 und der Verbundsicherheitsglasplatte 1 liegt wiederum eine elastomere Ringscheibe. Durch Einschrauben des Tellers 10 mit dem Gewindebolzen 11 in die Gewindebuchse 9 wird der Nutenstein 9^{c} gegen die Abdeckplatte 24 gezogen und dadurch die Verschiebbarkeit des Halters 2 relativ zu der Platte 1 bzw. dem Nutenstein 9^{c} gesperrt.

Auch bei der Ausführungsform nach Figur 69 ist der Halter 2 einteilig, d.h. der Arm 4 ist mit dem zweiten Montageteil 3 starr verbunden. Der Gegenteller 10 ist mit seinem Gewindezapfen 11 unter Zwischenlage von elastomeren Ringscheiben 7 in die angeformte Gewindebuchse 3' des zweiten Montageteils eingeschraubt. Die Verschiebbarkeit des Halters 2 gegenüber der Platte 1 wird dadurch erreicht, daß in der Platte 1 ein Langloch 1^{e} vorgesehen ist: Das Langloch ist durch eine Langloch-Glasschutzbuchse 13 ausgekleidet, in die die Gewindebuchse 3' hineinragt. Der Halter 2 ist nach entsprechender Lockerung des Gegentellers 10 relativ zu der Platte 1 verschiebbar, wobei eine Schraubendruckfeder 30 vorgesehen ist, die dem Halter 2 eine in Steckrichtung gerichtete Vorspannung verleiht. Bei der dargestellten Ausführungsform ist der erste Montageteil 5 von der Platte 1 weg abgewinkelt, so daß der Halter für die vorgesetzte Montage einsetzbar ist. Figur 69 zeigt den Halter 2 in einer Zwischenstellung, in der die Steckfassung 5^{a} nur teilweise mit dem Steckzapfen 16^{a} in Eingriff ist.

Figur 70 zeigt wieder einen zweiteiligen Halter mit Teleskoparm 4,4^{a}, dessen erster Montageteil 5 einen Steckzapfen 5^{b} trägt, der in eine Steckfassung 6^{a} eines Doppel-T-Trägers eingesteckt werden kann. Der teleskopierbare Arm 4,4^{a} erlaubt eine Schiebeweite SW, die gleich oder größer als die Stecktiefe ist oder die bevorzugt gleich der halben Stecktiefe ST oder zwischen der halben und der ganzen Stecktiefe ST liegt. Der Arretierung der Ausfahrstellung des Arms ist durch die Madenschraube 4^{b} möglich. Zwischen den beiden Armteilen 4 und 4^{a} kann eine Schraubendruckfeder (nicht dargestellt) angeordnet sein, die den beweglichen Armteil 4^{a} in Steckrichtung vorspannt. Im übrigen ist der Halter 2 für zwischengesetzte und vorgesetzte Montage einsetzbar. Hierzu braucht nur der bewegliche Teil 4^{a} des Arms oder der Halter insgesamt um seine Längsachse um 180° gedreht zu werden. Im übrigen entspricht der Halter im wesentlichen der Ausführungsform nach Figur 62.

Figur 71 zeigt die Halterung von zwei Platten 1 eines Glasdaches mit Haltern nach der in Figur 69 gezeigten Ausführungsform mit Langlöchern 1^{e} in den Glasplatten, wobei jedoch die Feder 30 weggelassen ist. Die Fuge zwischen den Glasplatten ist durch ein elastomeres Profil 31 abgedichtet.

Die Steckverbindung besteht bei den beschriebenen Ausführungsformen des Halters überwiegend aus einem zylindrischen Steckzapfen, der in eine entsprechend zylindrische Steckfassung eingreift. Es können aber auch andere Steckverbindungen zum Einsatz kommen, die beispielsweise einen nicht-kreisrunden Steckerquerschnitt haben und/oder mehrere Steckerzapfen und Steckfassungen haben. Der Vorteil einer Steckverbindung mit einem zylindrischen Steckzapfen und einer zylindrischen Fassung besteht darin, daß die Platte schwenkbar ist, wenn die Steckverbindungen von nur zwei Haltern auf derselben Steckachse in Eingriff sind. Dies ist bei der Montage der Platte von Vorteil, weil z.B. das untere Halterpaar in Eingriff gebracht werden kann, wenn das obere Halterpaar schon in Eingriff ist. Außerdem lassen sich Platten, insbesondere mit Solarmodulen bestückte Platten mit zwei solchen Haltern, die nicht im Bereich der Plattenecken (wie in Fig. 57), sondern an der Mittellinie (gestrichelte Linie in Fig. 57) angreifen, schwenkbar aufhängen. Dadurch kann die Neigung einer Solarplatte den tageszeitlichen und/oder jahreszeitlichen Änderungen des Sonneneinstrahlungswinkels nachgeführt werden.

Die Vorteile des erfindungsgemäßen Schiebe-Stecksystems zur Plattenmontage liegen in einer erheblichen Verringerung des auf der Baustelle zu erbringenden Montageaufwands und in der Sicherheit gegen Demontage durch unbefugte Personen.

Nach den Figuren 72 und 73 besteht die Vorrichtung zur Halterung der Verbundsicherheitsglasplatte 1 an einem Pfosten 6 aus einem Halter 2, dessen wesentliche Teile der Montageteil (zur Anbringung an der Glasplatte) aus einem ersten Teller 3 und einem zweiten Teller 10, ein an dem ersten Teller 3 angeformter Arm 4 und ein am Ende des Arms 4 angebrachter Anschraubteil 5 sind. Der Teller 3 hat glasplattenseitig einen angeformten axialen Zapfen 3' mit einer stirnseitigen Gewindebohrung 3'^{a}. Der zweite Teller 10 trägt glasplattenseitig einen axialen Gewindezapfen 11, der in die Gewindebohrung 3'^{a} eingeschraubt ist. Zur Montage liegt der Teller 3 mit Zwischenlage einer elastomeren Ringscheibe 7 an der Glasplatte 1 an, wobei sein Zapfen 3' die Glasplattenbohrung 1^{b} im wesentlichen durchstößt. Der zweite Teller 10 wird dann mit seinem Gewindezapfen 11 in die Gewindebohrung 3' eingeschraubt, bis er mit Zwischenlage einer zweiten elastomeren Ringscheibe 7 an der Glasplatte 1 anliegt. Zwischen dem metallischen Zapfen 3' und der Wand der Glasbohrung 1^{b} liegt eine Glasschutzhülse 13 aus Hartkunststoff.

Der am Ende des Arms 4 abgewinkelt angeformte Anschraubteil 5 hat eine Bohrung 5^{a}, deren Achse etwa in der Mittelebene der Platte 1 liegt. Eine Schraube 8 ist auf dem Anschraubteil 5 abgestützt und in eine Gewindebohrung 6^{a} des Vierkantpfostens 6 eingeschraubt, womit der Halter 2 an dem Pfosten befestigt ist.

Erfindungsgemäß hat der Teller 3 außenseitig eine axiale Aussparung 14 für die Aufnahme einer Lampe 17. Die Aussparung 14 besteht aus einem äußeren, sich nach außen erweiternden Teil 14^{a} von größerem Durchmesser und einem sich daran nach innen anschließenden inneren Teil 14^{b} von kleinerem Durchmesser. Der äußere Teil 14^{a} der Aussparung nimmt den Lampenkopf 17^{a} auf, während der innere Teil 14^{b} der Aussparung den Lampensockel 17^{b} aufnimmt. Der innere Aussparung steil 14^{b} hat ein Innengewinde 14^{c}, in das eine Fassung 18 eingeschraubt ist. Diese aus einem elektrisch isolierenden Material, z.B. Keramik, bestehende Fassung hat innenseitig Kontakte 19 für die Stromzuführung zu der eingeschraubten Lampe 17.

Der Teller 3 und der Arm 4 enthalten rückseitig eine nutartige Ausnehmung 15, die bis an die eingeschraubte Fassung 18 geführt ist und zur Aufnahme eines Kabels 16 für den Anschluß an die Kontakte 19 der Fassung 18 dient. Im Anschraubteil 5 geht die Ausnehmung 15 in eine Bohrung über, die auf eine Bohrung 6^{b} in dem Pfosten 6 trifft. Die Stromzufuhr für die Lampe 17 erfolgt über das Kabel 16 von einem Versorgungskabel 20, das in dem Pfosten 6 verlegt ist. Anstelle der offenen nutartigen Ausnehmung 15 kann auch eine abgedeckte Nut oder eine innere Bohrung durch den Teller 3, den Arm 4 und den Anschraubteil 5 zur Unterbringung des Kabels 16 dienen.

Bei der in Figur 74 gezeigten Ausführungsform des Halters 2 hat der Teller 3 anstelle des angeformten Zapfens einen in die axiale Gewindebohrung 14^{c} eingeschraubten Zapfen 3' aus einem druck- und biegefesten Kunststoff. Die Gewindebohrung 14^{c} hat einen Bund 14^{d}, der die Einschraubbewegung des Zapfens 3 begrenzt. Der Zapfen 3' enthält ähnlich wie bei der Ausführung nach Figur 1 einen inneren Aussparungsteil 14^{b}, der z.B. ein Innengewinde (nicht dargestellt) zum Einschrauben des Gewindesockels 17^{b} des Geräts 17 enthalten kann. Der so zugleich als Fassung für das Gerät 17 dienende Zapfen 3' enthält auch an das Kabel 16 angeschlossene Kontakte 19 für die Stromversorgung und/oder Signalableitung. Der Zapfen 3' hat für die Abführung des Kabels von den Kontakten 19 eine Ringnut (nicht dargestellt), die bei unterschiedlichen Drehstellungen des Zapfens 3' Verbindung zur Ausnehmung 15 im Teller 3 hat. Im übrigen entspricht der Zapfen 3' der Ausführung nach Figur 1, wobei jedoch die Glasschutzbuchse 13 entfallen kann.

Der Halter wurde beispielhaft für eine Lampe 17 beschrieben. Der Halter kann jedoch auch mit anderen elektrischen oder elektronischen Geräten, z.B. einem Bewegungsmelder, bestückt werden. Bewegungsmelder können auch mit Lampen kombiniert werden derart, daß z.B. ein Bewegungsmelder eine Treppenbeleuchtung einschaltet. Anstelle der Lampe 17 kann in die Aussparung 14 auch ein mit dem Teller 3 außen bündig abschließender Deckel eingeschraubt werden, wenn der Halter 2 vorläufig oder vorübergehend keine weitere Funktion haben soll.

Nach Figur 75 besteht die Vorrichtung zur Halterung einer Verbundsicherheitsglasplatte 1 an einem Pfosten 6 aus einem länglichen Halter 2, dessen wesentliche Teile der Montageteil (zur Montage an der Glasplatte) aus einem ersten Teller 3 und einem zweiten Teller 10, ein an dem ersten Teller 3 angeformter Arm 4,4' und ein am Ende des Arms angebrachter Anschraubteil 5 sind. Der Teller 3 hat glasplattenseitig einen axialen Zapfen 3' mit einer stirnseitigen Gewindebohrung 3'^{a}. Der zweite Teller 10 trägt glasplattenseitig einen axialen Gewindezapfen 11, der in die Gewindebohrung 3'^{a} eingeschraubt ist. Der Teller 3 liegt mit Zwischenlage einer elastomeren Ringscheibe (Gummischeibe) 7 an der Glasplatte 1 an, wobei sein Zapfen 3' eine Glasplattenbohdung 1^{b} im wesentlichen durchstößt. Der zweite Teller 10 wird zur Montage des Halters an der Glasplatte dann mit seinem Gewindezapfen 11 in die Gewindebohrung 3'^{a} eingeschraubt, bis er mit Zwischenlage einer zweiten elastomeren Ringscheibe 12 an der Glasplatte 1 anliegt. Zwischen dem metallischen Zapfen 3' und der Wand der Glasplattenbohrung 1^{b} liegt eine Glasschutzhülse 13 aus Hartkunststoff.

Der am Ende des Arms 4,4' abgewinkelt angeordnete Anschraubteil 5 hat eine Bohrung 5^{a}, deren Achse etwa in der Mittelebene der Platte 1 liegt. Eine Schraube 8 ist auf dem Anschraubteil 5 abgestützt und in eine Gewindebohrung 6^{a} des Vierkantpfostens 6 eingeschraubt, wodurch der Halter 2 an dem Pfosten 6 befestigt ist.

Erfindungsgemäß hat der Arm zwischen seinem ersten Teil 4 und seinem zweiten Teil 4' etwa an der der Plattenkante 1^{a} gegenüberliegenden Stelle ein Gelenk 35. Zur Bildung dieses Gelenks hat der Armteil 4 eine stufenartige kreisförmige Gelenkfläche 4^{a}, und der erste Armteil 4' hat eine entsprechende stufenartige kreisförmige Gelenkfläche 4'^{a}. Der Armteil 4 hat im Bereich der Gelenkfläche 4^{a} eine Senkkopfbohrung 4^{b}, und der erste Armteil 4' hat in der Gelenkfläche 4'^{a} eine axiale Gewindebohrung 4'^{b}. Durch eine Senkkopfschraube 36 werden die Gelenkflächen 4^{a} und 4'^{a} aufeinandergepresst und drehfest fixiert. Nach Lockerung der Schraube 36 kann die Neigung des Armteils 4 relativ zum Pfosten 6 verändert und in der gewünschten Lage fixiert werden.

Figur 76 zeigt eine Treppe mit einem auf einer Stufe montierten Pfosten 6, der am oberen Ende einen Handlauf 37 trägt und an dem vier erfindungsgemäße Halterungsvorrichtungen 2 angeschraubt sind. An den Haltern 2 sind parallelogrammförmige Glasplatten 1 montiert. Die Armteile 4 der Halter sind parallel zum Handlauf 37 und zu den Ober- und Unterkanten der Platten 1 ausgerichtet. Durch die Abknickung der Armteile 4 gegen die Horizontale um den Winkel α ergibt sich außer der optischen Anpassung an die Treppenneigung insbesondere der Vorteil, daß die Montageteile 3 der Halter einen ausreichenden und gleichen Abstand von der geneigten Glasplattenoberkante bzw. -unterkante haben, ohne daß die Halter am Pfosten von den Plattenecken unterschiedlich weit entfernt angebracht werden müssen.

Bei der Gelenkausführung nach den Figuren 77 und 78 hat die Gelenkfläche 4^{a} des Armteils 4 sechszehn umfangsmäßig verteilte Sackbohrungen 38, und die Gelenkfläche 4'^{a} des Armteils 4' trägt zwei sich diametral gegenüberliegende Steckzapfen 39, die in zwei sich diametral gegenüberliegende Bohrungen 38 eingreifen können, wenn die Flächen 4^{a} und 4'^{a} zusammengespannt sind, wodurch das Gelenk drehfest fixiert ist.

Bei der in Figur 79 gezeigten Ausführungsform trägt die Gelenkfläche 4^{a} des Armteils 4 eine Verzahnung 40 aus radial verlaufenden Zähnen, die schematisch dargestellt ist. Die Gelenkfläche 4'^{a} des zweiten Armteil 4' trägt die gleiche Verzahnung. Durch den gegenseitigen Eingriff beider Verzahnungen kann auch dieses Gelenk in einer gewünschten Winkellage drehfest zusammengespannt werden.

## Patentansprüche

1. Vorrichtung für die Halterung von Platten an neben den Platten in der Plattenebene oder seitlich von der Plattenebene versetzt angeordneten Tragelementen, insbesondere Pfosten, mit Haltern (2) mit einem Montageteil (3) an ihrem einen Ende und einem Anschraubteil (5) an ihrem anderen Ende, **dadurch gekennzeichnet, daß**
der Montageteil (3) einen Teller (3^{b},7) mit einer an der Platte (1) angreifenden Fläche umfaßt,
seitlich an dem Montageteil (3) ein sich zum Plattenrand (1^{a}) hin erstreckender Arm (4) angeformt ist, an den der Anschraubteil (5)
a) von dem Arm (4) abgewinkelt oder abgekröpft oder
b) ohne Abwinkelung oder Abkröpfung von dem Arm (4) angeformt ist und
das Plattengewicht durch auf derselben Seite der Platte (1) angreifende Halter (2) einseitig an den Tragelementen (6) abgestützt ist.

2. Vorrichtung nach Anspruch 1, **dadurch gekennzeichnet, daß** der Arm (4) des montierten Halters (2) mit Abstand zur Platte (1) verläuft.

3. Vorrichtung nach Anspruch 1 oder 2, **dadurch gekennzeichnet, daß** sich der Arm (4) mit dem Anschraubteil (5) über den Rand (1^{a}) der Platte (1) hinaus erstreckt.

4. Vorrichtung nach einem der Ansprüche 1 bis 3, **dadurch gekennzeichnet, daß** der Anschraubteil (5) für die Aufnahme eines Adapters (16; 17) zur Anpassung an unterschiedliche Querschnitte des Tragelements (6) eingerichtet ist.

5. Vorrichtung nach einem der Ansprüche 1 bis 4, **dadurch gekennzeichnet, daß** in dem Anschraubteil (5) und gegebenenfalls in dem Adapter (16) eine Gewindebohrung (5^{c}; 16^{a}) für einen Gewindestift enthalten ist.

6. Halter für Platten an Tragelementen, insbesondere an Pfosten, Säulen und Wänden, mit einem an der Platte (1) anzubringenden Montageteil (3) und einem über einen Adapter (16) an dem Tragelement (6; 34, 35;42) anzubringenden Anschlußteil (5), **dadurch gekennzeichnet, daß** zwischen dem Anschlußteil (5) und dem Adapter (16) eine Steckverbindung besteht.

7. Vorrichtung nach einem der Ansprüche 1 bis 6, **dadurch gekennzeichnet, daß** der Montageteil (3) einen dem Teller (3^{b}) auf der anderen Seite der Platte (1) gegenüberliegenden, zweiten Teller (10) umfaßt, der durch eine Bohrung (1^{d}) in der Platte (1) hindurch mit dem Teller (3^{b}) verschraubbär ist.

8. Vorrichtung nach einem der Ansprüche 1 bis 7, **dadurch gekennzeichnet, daß** der Montageteil (3) einen in der Platte fixierten Hinterschnittanker (21) mit aus der Platte (1) vorstehendem Gewindeteil umfaßt und der Montageteil (3) eine axiale Bohrung (3^{d}) mit eingesetzter Hülsenmutter (31) enthält, die mit dem Gewindeteil verschraubt ist.

9. Vorrichtung nach einem der Ansprüche 1 bis 7, **dadurch gekennzeichnet, daß** der Montageteil (3, 3') durch wenigstens eine Klebeschicht (26) mit der Platte (1) verbunden ist.

10. Halter nach Anspruch 6, **dadurch gekennzeichnet, daß** die Steckverbindung durch Stecker (5^{a}) an dem Anschlußteil (5) und Steckfassung(en) (16^{a}) in dem Adapter (16) gebildet ist.

11. Vorrichtung nach einem der Ansprüche 1 bis 5, **dadurch gekennzeichnet, daß** der Arm aus zwei Teilen (4,4') besteht, die gelenkartig verbunden und in unterschiedlichen Winkellagen zueinander feststellbar sind.

12. Vorrichtung nach Anspruch 11, **dadurch gekennzeichnet, daß** das Gelenk (35) an einer Stelle des Arms (4,4') angeordnet ist, die der Kante (1^{a}) der montierten Platte (1) etwa am nächsten liegt.

13. Vorrichtung nach Anspruch 11 oder 12, **dadurch gekennzeichnet, daß** bei dem an dem Tragelement (6) angeschraubten Halter (2) der Abknickwinkel α des Gelenks in dem Bereich von -45° bis +45° zur Horizontalen feststellbar ist.

14. Vorrichtung für die Halterung einer Platte, insbesondere einer Glasplatte, an zwei in der Plattenebene oder zur Plattenebene seitlich versetzt angeordneten Tragelementen, mit wenigstens zwei Haltern, die jeweils einen den einen Teil einer Steckverbindung aufweisenden ersten Montageteil (5) zur Verbindung mit dem anderen Steckverbindungsteil an dem Tragelement (6) und einen an der Platte (1) angebrachten zweiten Montageteil (3) umfassen, **dadurch gekennzeichnet, daß** ein den ersten Montageteil (5) umfassender Teil der Halter (2) oder die Halter (2) insgesamt relativ zu der Platte (1) in Steckrichtung verschiebbar und arretierbar sind.

15. Vorrichtung nach Anspruch 14, **Dadurch gekennzeichnet, daß** die beiden Montageteile (3,5) durch einen Arm (4) verbunden sind.

16. Vorrichtung nach Anspruch 14 oder 15, **dadurch gekennzeichnet, daß** die Summe der maximalen Schiebewege (SW) von zwei an verschiedenen Tragelementen (6) angreifenden Haltern (2) wenigstens gleich der Stecktiefe (ST) der Steckverbindung ist.

17. Vorrichtung nach einem der Ansprüche 14 bis 16, **dadurch gekennzeichnet, daß** der andere Teil der Steckverbindung an einem an dem Tragelement (6) angebrachten Adapter (16) ausgebildet ist.

18. Vorrichtung zur Halterung einer Platte an einem in der Plattenebene oder seitlich von dieser versetzt angeordneten Tragelement, insbesondere einem Pfosten, mit einem Montageteil aus einem ersten und einem zweiten Teller (3,10), die an der Platte (1) beiderseits einer Plattenbohrung (1^{b}) angreifen, und einem von dem ersten Teller (3) seitlich ausgehenden Arm (4) mit einem Anschraubteil (5), wobei der erste Teller (3) einen axialen Zapfen (3') trägt und durch die Plattenbohrung (1^{b}) hindurch mit dem zweiten Teller (10) verschraubbar ist,
**dadurch gekennzeichnet, daß** der erste Teller (3) eine außenseitig offene Aussparung (14) zur Aufnahme eines elektrischen oder elektronischen Geräts (17) enthält und
der Anschraubteil (5), der Arm (4) und der erste Teller (3) eine Ausnehmung (15) für die Aufnahme wenigstens eines Kabels (16) haben.

19. Vorrichtung nach Anspruch 18, **dadurch gekennzeichnet, daß** die Aussparung (14) einen äußeren Teil (14^{a}) zur wenigstens teilweisen Aufnahme des Gerätekopfes (17^{a}) und einen inneren Teil (14^{b}) zur Aufnahme des Gerätesockels (17^{b}) umfaßt.

20. Vorrichtung nach Anspruch 18 oder 19, **dadurch gekennzeichnet, daß** die Ausnehmung (15) wenigstens teilweise eine auf der Rückseite des Arms (4) und des ersten Tellers (3) verlaufende Nut umfaßt und im Anschraubteil (5) auf eine Bohrung (6^{b}) des Tragelements (6) trifft zwecks Anschluß des Kabels (16) an ein im Tragelement (6) verlaufendes Versorgungs- oder Sammelkabel (20).
